(19) Europäisches Patentamt
European Patent Office
Office européen des brevets

(11) **EP 4 132 828 B1**

(12) **FASCICULE DE BREVET EUROPEEN**

(45) Date de publication et mention de la délivrance du brevet:
**18.12.2024 Bulletin 2024/51**

(21) Numéro de dépôt: **21716405.2**

(22) Date de dépôt: **01.04.2021**

(51) Classification Internationale des Brevets (IPC):
**B60W 50/00** *(2006.01)*    **B60W 40/09** *(2012.01)*

(52) Classification Coopérative des Brevets (CPC):
**B60W 50/0098; B60W 40/09;** B60W 2050/0029;
B60W 2050/0075; B60W 2050/0083;
B60W 2510/1005; B60W 2510/182; B60W 2520/10;
B60W 2520/125; B60W 2540/10; B60W 2540/106;
B60W 2540/14; B60W 2540/18; B60W 2556/10

(86) Numéro de dépôt international:
**PCT/EP2021/058711**

(87) Numéro de publication internationale:
**WO 2021/204697 (14.10.2021 Gazette 2021/41)**

(54) **PROCÉDÉ DE RECONNAISSANCE D'UN MODE DE CONDUITE D'UN VÉHICULE ET DISPOSITIF DE RECONNAISSANCE ASSOCIÉ**

VERFAHREN ZUR ERKENNUNG EINES FAHRMODUS EINES FAHRZEUGS UND ZUGEHÖRIGE ERKENNUNGSVORRICHTUNG

METHOD FOR RECOGNISING A DRIVING MODE OF A VEHICLE AND ASSOCIATED RECOGNITION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2020 FR 2003650**

(43) Date de publication de la demande:
**15.02.2023 Bulletin 2023/07**

(73) Titulaire: **Ampere SAS**
**92100 Boulogne-Billancourt (FR)**

(72) Inventeurs:
• **BIERINX, Nicolas**
**91290 ARPAJON (FR)**
• **RANDON, Mathieu**
**91220 BRETIGNY SUR ORGE (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
DE-A1- 102013 104 855     FR-A1- 2 757 900
FR-A1- 2 800 679     FR-A1- 3 074 123
FR-B1- 2 800 679     US-A1- 2016 082 965
US-A1- 2018 281 812     US-B2- 9 550 497

EP 4 132 828 B1

**Description**

DOMAINE TECHNIQUE DE L'INVENTION

La présente invention concerne de manière générale un procédé de reconnaissance d'un mode de conduite d'un conducteur d'un véhicule et un dispositif de reconnaissance associé.

Elle concerne plus particulièrement un procédé de reconnaissance d'un mode de conduite d'un conducteur d'un véhicule, à un instant donné, ledit mode de conduite étant reconnu par une unité de commande parmi une pluralité de modes de conduite prédéterminés, comprenant des étapes :

a) d'établissement d'au moins une règle de logique floue associant, en entrée, au moins une prémisse au sujet de l'appartenance d'un paramètre de conduite du véhicule à un ensemble flou, et, en sortie, un des modes de conduite prédéterminés ;

b) de pondération par une unité de calcul, pour chaque règle de logique floue établie, du mode de conduite prédéterminé résultant de ladite règle de logique floue ; et

c) de reconnaissance par l'unité de commande du mode de conduite du véhicule à l'instant donné, à partir de chaque mode de conduite pondéré résultant de chaque règle de logique floue.

L'invention concerne aussi un dispositif de reconnaissance d'un mode de conduite d'un conducteur d'un véhicule, à un instant donné, ledit dispositif étant adapté à mettre en oeuvre un procédé de reconnaissance basée sur la logique floue.

L'invention trouve une application particulièrement avantageuse dans un véhicule automobile, mais elle pourrait s'appliquer à d'autres types de véhicules tels qu'un train, un bateau ou encore un avion. Elle pourrait encore s'appliquer à la conduite d'un véhicule fictif dans un jeu vidéo.

L'invention s'adresse tout particulièrement à un véhicule automobile, dans lequel certaines unités de conduite telles que la boîte de vitesses, l'injection, la direction, le freinage ou encore la suspension sont commandées de manière électronique, en réponse à des stimulations du conducteur sur des organes de commande du véhicule tels que les pédales d'accélérateur, de frein et d'embrayage, le levier de vitesses ou encore le volant.

ETAT DE LA TECHNIQUE

On connaît notamment, dans le document FR2757900, un procédé de reconnaissance d'un mode de conduite d'un véhicule tel que celui défini en introduction. Plus précisément, dans ce document, la pondération de chaque mode de conduite résultant de chaque règle de logique floue est obtenue en déterminant le degré d'appartenance du paramètre de conduite de la prémisse intervenant dans cette règle à l'ensemble flou de cette prémisse, à l'aide de la fonction d'appartenance dudit paramètre de conduite audit ensemble flou.

Dans un tel procédé de reconnaissance, les fonctions d'appartenance de chaque paramètre à l'ensemble flou correspondant sont calibrées une fois pour toute, à partir du comportement d'un conducteur de référence représentatif d'un grand nombre d'utilisations du véhicule par une population choisie. Le procédé de reconnaissance de ce document permet donc de reconnaître le mode de conduite du véhicule par rapport au comportement typique du conducteur de référence dans chaque mode de conduite.

Cependant, ce procédé de reconnaissance ne tient pas compte, d'une part, du comportement habituel du conducteur du véhicule dans chaque mode de conduite, qui peut s'écarter du comportement typique du conducteur de référence, et, d'autre part, du comportement instantané du conducteur du véhicule qui peut lui-même s'écarter de son comportement habituel.

Il est d'autre part connu que le mode de conduite du véhicule puisse être choisi manuellement par le conducteur du véhicule, au moyen d'une interface.

Cependant, ce choix requiert une action du conducteur du véhicule est n'est pas automatisé via un procédé de reconnaissance.

On connait également du document FR3074123 des modèles d'apprentissage automatique entrainés, des procédés et des appareils permettant évaluer un style de conduite d'un conducteur d'un véhicule routier en mouvement. Le principe général de ce document est basé sur la détermination des différentes variations de style de conduite d'un conducteur d'un véhicule routier au cours d'une session de conduite grâce à l'apprentissage automatique. Pour cela, ce document propose de créer un modèle d'apprentissage automatique qui est entrainé pour évaluer un style de conduite récent d'un conducteur d'un véhicule routier. Dans ce document, le modèle d'apprentissage automatique entrainé est obtenu selon une démarche d'apprentissage automatique en deux phases impliquant une classification non-supervisée et en particulier du regroupement de données suivie d'une classification supervisée.

Ainsi que par ailleurs, du document FR2800679, un procédé de commande d'un groupe motopropulseur de véhicule automobile composé d'un moteur à combustion interne et d'une transmission automatisée pilotés par un <u>système de contrôle électronique caractérisé en ce que le fonctionnement du moteur d'une part, et celui de la transmission automatisée d'autre part, sont adaptés au mode de conduite du véhicule.</u>

PRESENTATION DE L'INVENTION

Afin de remédier aux inconvénients précités de l'état de la technique, la présente invention propose un nouveau procédé de reconnaissance d'un mode de conduite d'un véhicule qui tient compte de l'individualité du conducteur du véhicule et de son humeur instantanée, sans action volontaire de la part du conducteur, autres que les actions habituellement effectuées sur les organes de commande du véhicule.

Plus particulièrement, on propose selon l'invention un procédé de reconnaissance tel que défini dans l'introduction, selon lequel il est prévu, à l'étape de pondération b), de mettre en oeuvre les sous-étapes suivantes :

b1) détermination par une unité de mesure, à l'instant donné, d'une valeur de chaque paramètre intervenant dans chaque prémisse, chaque paramètre étant associé, d'une part, à une fonction d'appartenance de référence dudit paramètre audit ensemble flou correspondant, et, d'autre part, à une répartition statistique des valeurs possibles dudit paramètre pour le conducteur,
b2) ajustement par l'unité de calcul de la répartition statistique des valeurs associées à chaque paramètre intervenant dans chaque prémisse en y incorporant la valeur dudit paramètre déterminée à l'instant donné,
b3) détermination par l'unité de calcul, pour le conducteur, à l'instant donné, de la fonction d'appartenance réelle de chaque paramètre intervenant dans chaque prémisse audit ensemble flou correspondant, à l'aide de la fonction d'appartenance de référence et de la répartition statistique ajustée des valeurs dudit paramètre,
b4) détermination par l'unité de calcul d'un degré d'appartenance dudit paramètre audit ensemble flou correspondant, à partir de ladite fonction d'appartenance réelle et de la valeur du paramètre déterminée audit instant donné, et b5) pondération par l'unité de calcul du mode de conduite prédéterminé résultant de la règle de logique floue, à partir dudit degré d'appartenance.

Ainsi, grâce à l'invention, le procédé de reconnaissance du mode de conduite est capable de déterminer le mode de conduite du véhicule qui correspond le mieux au conducteur, compte tenu de ses habitudes de conduite et de son humeur, et ce, de manière automatique et automatisée.

Plus précisément, l'unité de calcul fait appel, à la sous-étape b1), à la répartition statistique des valeurs du paramètre, cette répartition statistique caractérisant la manière de conduire du conducteur. Connaître la manière de conduire du conducteur permet d'améliorer la reconnaissance du mode de conduite.

En outre, grâce à la sous-étape b2) selon l'invention, la manière de conduire du conducteur est apprise au fur et à mesure des conduites de ce dernier, ce qui permet d'améliorer encore la reconnaissance du mode de conduite pour ce conducteur, et aussi de mieux détecter un changement dans son comportement.

A la sous-étape b3) selon l'invention, l'utilisation de la fonction d'appartenance réelle du conducteur, qui tient compte du comportement instantané du conducteur et/ou de son comportement habituel, et non pas du comportement typique d'un conducteur de référence, améliore la précision de la reconnaissance du mode de conduite.

Les réactions du véhicule aux stimulations du conducteur étant basées sur le mode de conduite reconnu, la conduite est plus confortable et plus sécuritaire.

D'autres caractéristiques avantageuses et non limitatives du procédé conforme à l'invention, prises individuellement ou selon toutes les combinaisons techniquement possibles, sont les suivantes :

- à la sous-étape b3), l'unité de calcul détermine la fonction d'appartenance réelle du paramètre à l'ensemble flou correspondant en décalant, selon l'axe des abscisses, la fonction d'appartenance de référence de ce paramètre à cet ensemble flou d'une valeur égale à l'écart entre la moyenne des valeurs du paramètre pour le conducteur et la moyenne de référence des valeurs du paramètre pour un conducteur de référence ;
- à la sous-étape b3), l'unité de calcul détermine la fonction d'appartenance réelle du paramètre à l'ensemble flou correspondant en modifiant la pente de la fonction d'appartenance de référence du paramètre à cet ensemble flou en fonction de la position de la valeur du paramètre de conduite à l'instant donné dans la répartition statistique des valeurs de ce paramètre ;
- la répartition statistique des valeurs possibles pour le paramètre de conduite est une courbe de Gauss fournissant la densité de probabilité associée à chaque valeur dudit paramètre pour le conducteur ;
- la courbe de Gauss associée à chaque paramètre de conduite est obtenue par un calcul de moyenne arithmétique et d'écart-type d'au moins 1000 valeurs dudit paramètre déterminées lors de la conduite du véhicule par le conducteur ;
- à la sous-étape b2), l'unité de calcul ajuste la courbe de Gauss associée à chaque paramètre au fur et à mesure des conduites du véhicule par le conducteur, en incorporant au calcul de la moyenne arithmétique et de l'écart-type dudit paramètre chaque valeur du paramètre déterminée à chaque instant donné ;

- à l'étape c), l'unité de commande reconnaît le mode de conduite du véhicule, à l'instant donné, par un calcul de centre de gravité basé sur les modes de conduite pondérés résultant des règles de logique floue ;
- les paramètres de conduite du véhicule sont les suivants : l'angle de pédale d'accélérateur, la pression de freinage, l'angle de pédale d'embrayage, l'angle volant, le rapport de boîte de vitesse, l'accélération transversale du véhicule, la vitesse du véhicule, le gradient de l'angle de pédale d'accélérateur, la moyenne arithmétique de l'angle de pédale d'accélérateur, le gradient de l'angle volant, et le temps de passage entre le frein et la pédale d'accélérateur ;
- l'unité de mesure détermine la valeur du paramètre de conduite du véhicule directement à l'aide d'un capteur disposé dans le véhicule qui mesure ladite valeur, ou à partir d'un calcul faisant intervenir un autre paramètre de conduite dont la valeur est mesurée à l'aide d'un capteur disposé dans le véhicule ;
- la fonction d'appartenance de référence est établie pour un conducteur de référence fictif représentant au moins 6000 roulages d'une population choisie ;
- l'unité de commande reconnaît le mode de conduite parmi les modes de conduite prédéterminés suivants : un mode de conduite sportif, un mode de conduite souple et au moins un mode conduite intermédiaire entre lesdits modes de conduite souple et sportif.

L'invention propose également un dispositif de reconnaissance d'un mode de conduite d'un conducteur d'un véhicule, à un instant donné, comprenant

- une unité de mémoire dans laquelle sont mémorisés : une pluralité de modes de conduite prédéterminés, au moins une règle de logique floue associant, en entrée, au moins une prémisse au sujet de l'appartenance d'un paramètre de conduite du véhicule à un ensemble flou, et, en sortie, un des modes de conduite prédéterminés ; et, pour chaque paramètre de conduite intervenant dans chaque prémisse, une fonction d'appartenance de référence dudit paramètre à l'ensemble flou correspondant ainsi qu'une répartition statistique des valeurs possibles dudit paramètre pour le conducteur,
- une unité de mesure comportant au moins un capteur disposé dans le véhicule, ladite unité de mesure étant adaptée à déterminer, à l'instant donné, la valeur de chaque paramètre intervenant dans chaque prémisse,
- une unité de calcul adaptée à pondérer le mode de conduite prédéterminé résultant de chaque règle de logique floue mémorisée, en mettant en oeuvre, pour chaque règle de logique floue, les sous-étapes suivantes :

    b2) ajustement de la répartition statistique associée à chaque paramètre intervenant dans chaque prémisse en y incorporant la valeur dudit paramètre mesurée par l'unité de détermination à l'instant donné,
    b3) détermination, à l'instant donné, pour le conducteur, de la fonction d'appartenance réelle de chaque paramètre intervenant dans chaque prémisse à l'ensemble flou correspondant, à l'aide de la fonction d'appartenance de référence et de la répartition statistique ajustée des valeurs dudit paramètre,
    b4) à partir de ladite fonction d'appartenance réelle et de la valeur du paramètre déterminée audit instant donné, détermination d'un degré d'appartenance dudit paramètre à l'ensemble flou correspondant,
    b5) pondération du mode de conduite prédéterminé résultant de la règle de logique floue à partir dudit degré d'appartenance ; et

- une unité de commande adaptée à reconnaître le mode de conduite du véhicule, à l'instant donné, à partir de chaque mode de conduite pondéré résultant de chaque règle de logique floue .

Ce dispositif est adapté à mettre en oeuvre le procédé selon l'invention.

Ainsi, il présente les mêmes avantages que ceux décrits dans le cadre du procédé.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est une représentation schématique des étapes principales d'un procédé conforme à l'invention ;
[Fig. 2] est une représentation schématique d'un dispositif conforme à l'invention ;

[Fig. 3] est une courbe de Gauss donnant la densité de probabilité de chacune des valeurs qu'est susceptible de prendre un paramètre Li de conduite pour un conducteur unique, par exemple le paramètre « temps de passage de la pédale d'accélérateur à la pédale de frein » pour ce conducteur unique ;

[Fig. 4] est une représentation graphique d'une courbe de Gauss de référence donnant la densité de probabilité de chacune des valeurs qu'est susceptible de prendre un paramètre de conduite pour un conducteur de référence et d'une courbe de Gauss de ce même paramètre de conduite pour le conducteur unique ;

[Fig. 5] est une représentation graphique d'une fonction d'appartenance F réelle d'un paramètre de conduite à un ensemble flou qui découle d'une fonction d'appartenance de référence Fréf de ce même paramètre de conduite à ce même ensemble flou ;

[Fig. 6] est une représentation graphique de quatre fonctions d'appartenance F1 ; F2 ; F3 ; F4 réelles d'un paramètre de conduite à un ensemble flou qui découlent d'une fonction d'appartenance de référence Fréf de ce même paramètre de conduite à ce même ensemble flou ;

[Fig. 7] est une représentation graphique de cinq fonctions d'appartenance F ; F1 ; F2 ; F3 ; F4 réelles d'un paramètre de conduite à un ensemble flou qui découlent d'une fonction d'appartenance de référence Fréf de ce même paramètre de conduite à ce même ensemble flou ;

[Fig. 8] est une représentation graphique de la méthode des barycentres visant à synthétiser la pondération des différents modes de conduite résultants des règles de logique floue pour déterminer le mode de conduite du conducteur à un instant donné ;

[Fig. 9] est une représentation graphique d'un exemple de onze lois C1, C21 à C29 et C3 associées à onze modes de conduite différents, donnant la consigne de puissance que le moteur doit fournir, en pourcentage, en fonction du ratio d'angle de pédale d'accélérateur appliqué par le conducteur unique, en pourcentage.

Dispositif

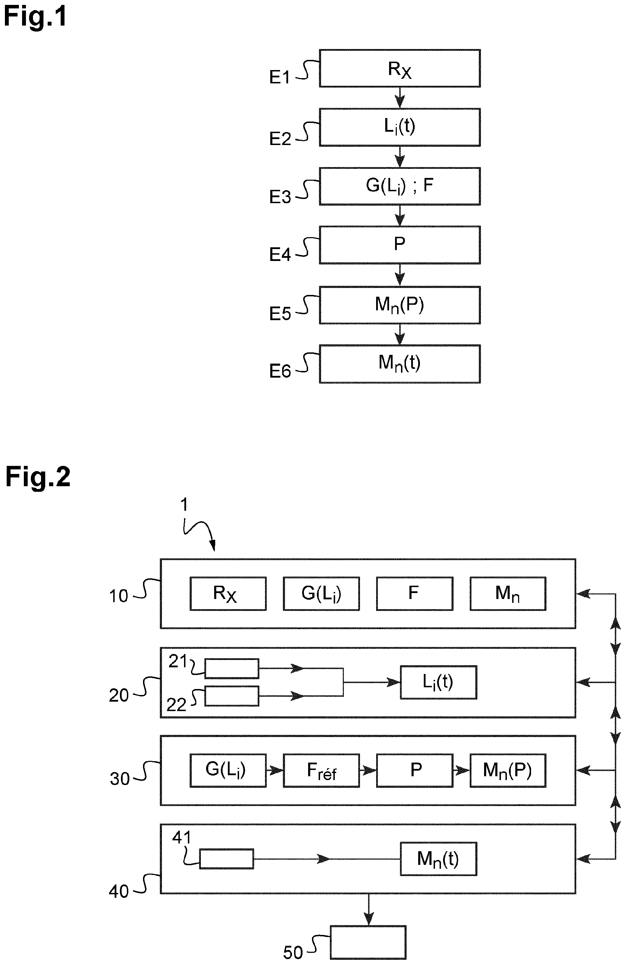

Sur la figure 2, on a représenté un dispositif 1 conforme à l'invention, adapté à mettre en oeuvre un procédé selon l'invention dont les étapes principales sont représentées sur la figure 1.

Ce dispositif 1 et ce procédé visent chacun à reconnaître le mode de conduite Mn(t) d'un conducteur unique d'un véhicule automobile, à un instant t donné, à partir de règles Rx de logique floue préétablies.

Par convention, dans la suite de la description, le conducteur en tant que personne individuelle sera dénommé « conducteur », tandis qu'un éventuel conducteur de référence auquel ce conducteur est comparé sera dénommé « conducteur de référence ».

Le mode de conduite Mn(t) déterminé, à l'instant t, par le dispositif 1 et/ou le procédé selon l'invention est ici un des modes de conduite Mn prédéterminés suivants : un mode de conduite sportif M1, un mode de conduite souple M3 et au moins un mode conduite intermédiaire M2 entre lesdits modes de conduite souple et sportif.

Par convention, on définit le mode de conduite sportif M1 comme une manière de conduire le véhicule avec laquelle le conducteur recherche de la vivacité et des réactions instantanées du moteur. Dans le mode de conduite sportif, le moteur doit être sensible aux requêtes d'accélération ou de freinage du conducteur, par exemple mesurées par les angles des pédales d'accélérateur et de frein. Ainsi, le conducteur peut obtenir des accélérations franches et immédiates en sélectionnant un régime élevé de puissance maximale, par exemple autour de 6000 à 7000 tours par minute. Le confort du conducteur n'entre que faiblement en ligne de compte. Ainsi, lors d'une conduite dite sportive, le conducteur vise des sensations de performance, sans trop se préoccuper de la consommation de carburant et du silence de fonctionnement.

A l'inverse, on définit le mode de conduite souple M3 comme une manière de conduire le véhicule avec laquelle le conducteur recherche un haut niveau d'agrément. Le conducteur recherche à doser très finement l'accélération et le freinage pour un fonctionnement souple et sans à-coup, surtout en roulage urbain ou dans des embouteillages. Le conducteur souhaite une progressivité dans l'arrivée du couple moteur, avec de relativement faibles valeurs du régime moteur, autour de 3000 tours par minute au maximum par exemple. L'économie de carburant ainsi que le silence d'utilisation peuvent aussi être parmi les objectifs recherchés. Ainsi, lors d'une conduite dite souple, le conducteur vise du confort et de la souplesse de fonctionnement et il convient de réduire la sensibilité du moteur aux requêtes d'accélération ou de freinage du conducteur, par exemple mesurées par les angles de pédales d'accélérateur et de frein. Il s'en suit une réduction des à-coups d'accélération et de décélération du véhicule (notamment sur les premiers rapports), et une limitation des envolées de régime sur des enfoncements de pédale très faibles.

Entre les deux modes de conduite précédemment décrits, qui sont deux modes de conduite extrêmes d'un même véhicule, on définit au moins un mode de conduite intermédiaire M2 qui est une manière de conduire le véhicule pour laquelle le conducteur recherche de la performance mais sans le risque des à-coups du mode sportif, et avec une certaine sensation de confort. Autrement dit, le mode de conduite intermédiaire M2 relève d'un bon compromis entre une progressivité importante, soit un débit d'air augmentant beaucoup plus lentement que l'enfoncement de la pédale sur le début de la course comme pour une conduite souple, et une progressivité faible rendant le moteur extrêmement sensible au moindre effleurement de la pédale. Le mode de conduite intermédiaire M2 est donc un mode de conduite exigeant, pour lequel la mise au point d'un véhicule doit être un compromis, sans défaut. Il ne faut pas sacrifier totalement le confort au profit des sensations : une trop grande souplesse du moteur est à éviter car elle donnerait la désagréable sensation que le moteur est lymphatique, mais une vivacité excessive ne correspond pas non plus à l'attente du conducteur et il convient de limiter au maximum les à-coups éventuels.

Bien entendu, il peut y avoir un très grand nombre de modes de conduite intermédiaires, en augmentant plus ou moins le confort par rapport à la performance et inversement. Tous les modes de conduite intermédiaires s'étalent entre les modes de conduite extrêmes sportif et souple M1, M3 décrits précédemment.

Le véhicule automobile comporte au moins une unité de commande 40 qui commande de manière électronique une ou plusieurs unités de conduite 50 du véhicule, en réponse à des stimulations du conducteur sur des organes de commande du véhicule tels que les pédales d'accélérateur, de frein et d'embrayage, le levier de vitesses ou encore le volant. Plus précisément, l'unité de commande 40 du véhicule est ici adaptée à commander au moins une des unités de conduite 50 sur les principes suivants : l'unité de conduite gérant l'accélération est commandée en adaptant les quantités d'air et de carburant entrant dans les cylindres du moteur en fonction de l'enfoncement de la pédale d'accélérateur, l'unité de conduite gérant la direction est commandée en adaptant l'orientation des roues en fonction de l'angle du volant, l'unité de conduite gérant le freinage est commandée en adaptant à la fois le frein moteur et l'actionnement des disques de frein en fonction de l'angle des pédales d'accélérateur ou de frein voire d'embrayage, l'unité de conduite gérant la suspension est commandée en adaptant la plus ou moins grande souplesse de l'amorti, ou encore, dans le cas d'une boîte de vitesses automatique, l'unité de conduite gérant la boîte de vitesses est commandée en adaptant le passage d'une vitesse à l'autre en fonction de l'enfoncement des pédales d'accélérateur ou de frein.

En fonction du mode de conduite Mn(t) reconnu par le procédé et/ou le dispositif 1, à l'instant t, la commande desdites unités de conduite 50 par l'unité de commande 40 ne sera pas la même pour une même stimulation du conducteur sur les organes de commande correspondants.

A cet effet, différentes lois de de progressivité sont cartographiées dans une unité de mémoire 10 du véhicule, afin d'adapter la commande des unités de conduite 50 en fonction du mode de conduite Mn(t) reconnu. Par exemple, l'unité de mémoire 10 comporte des lois bijectives préétablies liant un angle de pédale d'accélérateur avec une requête de couple moteur brut à envoyer au groupe motopropulseur.

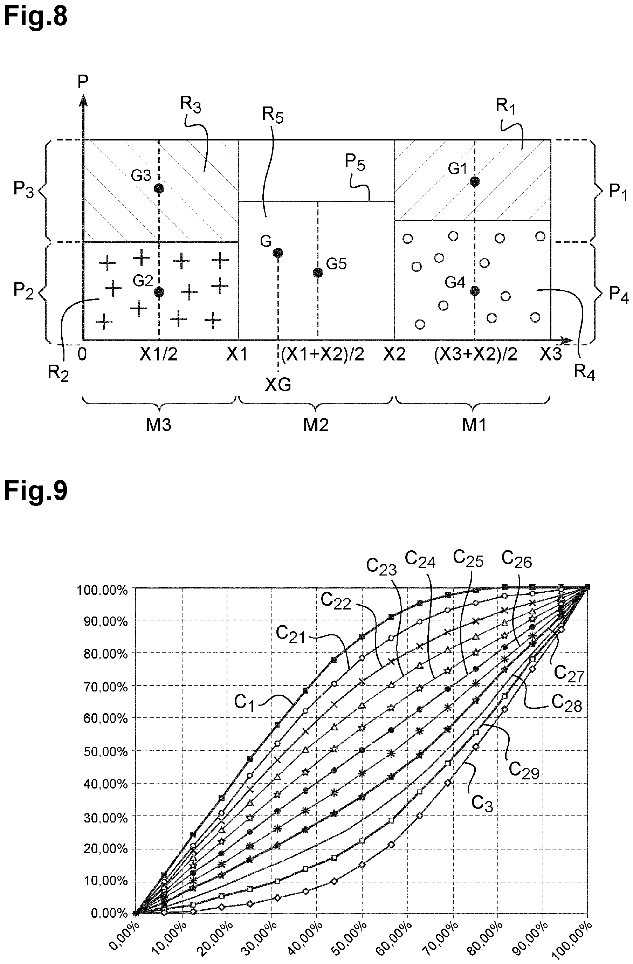

On a représenté sur la figure 9 de telles lois, pour onze modes de conduites différents. Les onze courbes C1, C21 à C29, et C3 de la figure 9 représentent la consigne de puissance que le moteur doit fournir, en pourcentage, en fonction du ratio d'angle de pédale d'accélérateur appliqué par le conducteur, en pourcentage. Pour toutes les courbes, lorsque l'angle de pédale d'accélérateur est nul, la puissance du moteur est nulle et lorsque l'angle de pédale d'accélérateur est maximal, la puissance du moteur est maximale. Entre ces deux positions angulaires extrêmes de la pédale d'accélérateur, la puissance que le moteur fournit est différente en fonction du mode de conduite Mn. Plus le mode de conduite est sportif, plus la courbe représentative de la loi présente initialement une pente raide, et, à l'inverse, plus le mode de conduite est souple, plus la courbe présente initialement une pente douce. Ainsi, la loi C1 représente le comportement du moteur en fonction de l'angle de pédale d'accélérateur pour le mode de conduite sportif M1, la loi C3 représente le comportement du moteur en fonction de l'angle de pédale d'accélérateur pour le mode de conduite souple M3, et les lois C21 à C29 représentent le comportement du moteur en fonction de l'angle de pédale d'accélérateur pour des modes de conduite intermédiaires entre les modes de conduite sportif et souple M1, M3.

Cette commande des unités de conduite 50 par l'unité de commande 40 implique que le mode de conduite Mn(t) soit déterminé dynamiquement, de manière précise et individualisée pour le conducteur du véhicule, tant pour des raisons de confort que pour des raisons de sécurité, ce que permet avantageusement l'invention. Cette détermination du mode de conduite Mn(t) peut être réalisée en temps réel, ou sur des intervalles de temps plus long. Par exemple, il n'est pas souhaitable que le mode de conduite soit déterminé pendant une phase d'accélération, auquel cas la détermination sera faite sur un temps plus long.

Comme le montre la figure 2, le dispositif 1 comprend :

- une unité de mémoire 10 dans laquelle sont mémorisés la pluralité de modes de conduite Mn prédéterminés et au moins une règle Rx de logique floue associant, en entrée, au moins une prémisse au sujet de l'appartenance d'un paramètre de conduite Li du véhicule à un ensemble flou Az, et, en sortie, un des modes de conduite Mn prédéterminés,
- une unité de mesure 20 comportant au moins un capteur 21 disposé dans le véhicule, ladite unité de mesure 20 étant adaptée à déterminer, à l'instant t donné, la valeur Li(t) d'un paramètre de conduite du véhicule intervenant dans la prémisse de la règle Rx,
- une unité de calcul 30 adaptée à mettre en oeuvre diverses étapes de calcul, en lien avec chaque règle Rx de logique floue, pour pondérer le mode de conduite Mn prédéterminé résultant de chacune desdites règles Rx de logique floue, et,
- l'unité de commande 40 du véhicule qui reconnaît le mode de conduite Mn(t) du véhicule, par le conducteur, à l'instant donné, à partir du mode de conduite pondéré Mn(P) résultant de chacune des règles Rx de logique floue.

Toutes les unités 10, 20, 30, 40 du dispositif 1 sont adaptées à communiquer les unes avec les autres par exemple au moyen d'un bus qui permet, de faire circuler les différentes données et de transmettre aux unités lesdites données.

L'unité de mémoire 10 peut être embarquée dans le véhicule, ou déportée partiellement voire totalement du véhicule. Dans le cas où l'unité de mémoire 10 est déportée (partiellement ou totalement), elle est adaptée à communiquer avec les différentes unités du dispositif 1 par un système de communication sans fil. Lorsqu'elle est embarquée dans le véhicule, il peut s'agir d'une mémoire flash intégrée au véhicule, ou d'une mémoire flash rapportée dans le véhicule, par exemple au moyen d'une clé USB. Toutes les autres unités 20, 30, 40 sont embarquées dans le véhicule.

En pratique, l'unité de mémoire 10 stocke, d'une part, les modes de conduite prédéterminés Mn, et, d'autre part, une pluralité de règle Rx de logique floue, faisant intervenir différentes prémisses sur différents paramètres de conduite du véhicule.

Les modes de conduites Mn prédéterminés qui sont stockés dans l'unité de mémoire 10 correspondent en pratique à une liste finie et déterminée de numéros, par exemple Mn (n est un entier), chaque numéro Mn étant associé à un ensemble de lois de progressivité cartographiées (telle que celle représentée sur la figure 9) permettant la commande des unités de conduite 50 du véhicule.

Comme il sera expliqué plus en détails ci-après, chaque règle Rx stockée dans l'unité de mémoire 10 comporte en entrée au moins une prémisse qui s'apparente à une affirmation énoncée de la manière suivante « le paramètre Li de conduite appartient à l'ensemble flou Az ». Si cette affirmation (ou prémisse) est vérifiée, alors il découle en sortie de la règle Rx un mode de conduite Mn prédéterminé.

Les règles Rx de logique floue stockées dans l'unité de mémoire 10 peuvent être associées à une seule prémisse, (ce que l'on peut exprimer sous la forme : SI [une prémisse est vérifiée] ALORS [le mode de conduite est le mode Mn]), ou à plusieurs prémisses (ce que l'on peut exprimer sous la forme : SI [plusieurs prémisses sont vérifiées en même temps] ALORS [le mode de conduite est le mode Mn]).

Les paramètres de conduite Li du véhicule sont par exemple les suivants : l'angle de pédale d'accélérateur L1, la pression de freinage L2, l'angle de pédale d'embrayage L3, l'angle volant L4, le rapport de boîte de vitesse L5, l'accélération transversale du véhicule L6, la vitesse du véhicule L7, le gradient de l'angle de pédale d'accélérateur L8, la moyenne arithmétique d'au moins 1000 valeurs de l'angle de pédale d'accélérateur L9, le gradient de l'angle volant L10, et le temps de passage entre la pédale de frein et la pédale d'accélérateur L11.

Les angles des pédales d'accélérateur et d'embrayage L1, L3 peuvent être aussi interprétés comme les pourcentages d'enfoncement de ces pédales. La pression de freinage pourrait être remplacée par l'angle de la pédale de frein, ou par le pourcentage d'enfoncement de la pédale de frein. Le temps de passage entre la pédale de frein et la pédale d'accélérateur doit être compris comme le temps mis par le conducteur pour passer d'un pourcentage d'enfoncement nul (0% d'appui) sur une des pédales à un pourcentage d'enfoncement non nul sur l'autre pédale.

Bien entendu, sans sortir du cadre de l'invention, d'autres paramètres de conduite peuvent être envisagés, en complément ou en remplacement de ceux énoncés ci-dessus.

La valeur Li(t) de chacun des paramètres de conduite est obtenue par l'unité de mesure 20, soit par une mesure directe à l'aide d'un des capteurs 21 disposés dans le véhicule, soit par un calcul faisant intervenir un autre paramètre de conduite dont la valeur est mesurée à l'aide de l'un desdits capteurs 21.

Ici, l'unité de mesure 20 comporte au moins un capteur de pédale d'accélérateur fournissant la valeur d'angle de la pédale d'accélérateur L1, un capteur de pédale de frein fournissant la valeur de pression de freinage L2, un capteur de pédale d'embrayage fournissant la valeur d'angle de pédale d'embrayage L3, un capteur de volant fournissant la valeur d'angle du volant L4, un capteur de levier de vitesse fournissant le rapport de la boîte de vitesse L5, un capteur ABS fournissant la valeur d'accélération transversale L6, un capteur de vitesse fournissant la valeur de vitesse du véhicule L7, et un chronomètre se déclenchant à chaque actionnement et relâchement des pédales de frein et d'accélérateur pour fournir le temps de passage entre la pédale de frein et la pédale d'accélérateur L11.

Les valeurs des autres paramètres L8 à L10 sont déduites de certaines des valeurs précédentes par un calculateur 22 ; 30 effectuant un calcul approprié de gradient ou de moyenne, chacun de ces calculs nécessitant une variation, donc au moins deux valeurs successives du même paramètre. En pratique, le calculateur utilisé peut être l'unité de calcul 30 ou un calculateur 22 distinct inclus dans l'unité de mesure 20.

En pratique, les instants t auxquels sont acquises les valeurs Li(t) des paramètres de conduite Li sont déterminés par la conduite du conducteur puisqu'ils correspondent aux instants t où les capteurs détectent un changement de valeur. Ainsi, les instants t auxquels sont mesurés les différents paramètres ne sont pas des intervalles de temps fixes. En variante, il pourrait bien entendu en être autrement.

On peut par exemple définir les règles suivantes, à partir de certains des paramètres énoncés ci-dessus :

- R1 : SI [le temps de passage entre la pédale de frein et la pédale d'accélérateur L11 est élevé] ALORS [le mode de conduite est le mode sportif M1], et

- R2 : SI [le temps de passage entre la pédale de frein et la pédale d'accélérateur L11 est lent] ALORS [le mode de conduite est le mode souple M3] ;
- R3 : SI [la vitesse du véhicule est élevée] ALORS [le mode de conduite est le mode souple M3] ; et,
- R4 : SI [l'angle de pédale d'accélérateur est élevé] ET [le rapport de boîte de vitesse est intermédiaire] ALORS [le mode de conduite est le mode sportif M1] ;
- R5 : Si [le gradient de pédale d'accélérateur est modéré] ALORS [le mode de conduite est intermédiaire].

Bien entendu, en pratique, le nombre de règles est bien plus important et fait intervenir l'ensemble des paramètres de conduite Li.

En outre, pour prendre en compte de manière précise le comportement du conducteur, il est important que chaque règle soit compensée par une règle antagoniste, à la manière des règles R1 et R2 citées ci-dessus.

Plutôt que d'utiliser une logique booléenne, selon laquelle, en reprenant les exemples de règles R1 et R2, le temps de passage L11 est systématiquement considéré comme élevé s'il est supérieur à un temps moyen choisi, et systématiquement considéré comme lent s'il est inférieur à ce temps moyen, on préfère utiliser la logique floue qui consiste à déterminer le degré d'appartenance P dudit temps de passage L11 aux ensemble flous « temps de passage élevé » et « temps de passage lent ».

Autrement dit, on utilise la logique floue pour introduire une notion de degré dans la vérification des prémisses. Ainsi, la logique floue confère une flexibilité très appréciable aux règles Rx, ce qui rend possible la prise en compte des imprécisions et des incertitudes.

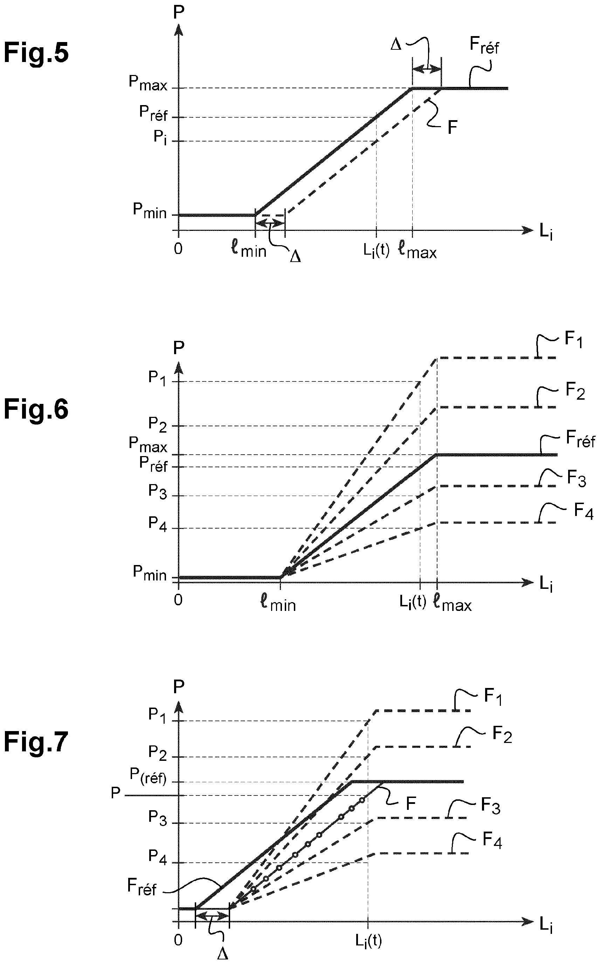

Dans les règles Rx de logique floue utilisées dans le dispositif 1 selon l'invention, la prémisse concerne donc l'appartenance plus ou moins certaine d'un des paramètres de conduite Li du véhicule à un ensemble flou Az. Ici, chaque prémisse fait intervenir un unique paramètre Li de conduite et un unique ensemble flou Az, mais chaque règle peut comporter plusieurs prémisses, comme déjà expliqué. Pour quantifier l'appartenance du paramètre Li à un des ensembles flous Az auquel il est susceptible d'appartenir, on fait appel à une fonction d'appartenance F du paramètre de conduite Li à l'ensemble flou Az énoncé dans la prémisse. Comme le montre la figure 5, ladite fonction d'appartenance F donne le degré d'appartenance P du paramètre de conduite Li à l'ensemble flou Az considéré en fonction de la valeur Li(t), à l'instant t donné, dudit paramètre de conduite Li.

Ici, c'est l'unité de calcul 30 du dispositif 1 selon l'invention qui est utilisée pour déterminer le degré d'appartenance P dudit paramètre Li à l'ensemble flou correspondant à partir de ladite fonction d'appartenance F associée audit paramètre Li et de la valeur Li(t) du paramètre, déterminée audit instant t donné.

De manière remarquable, l'unité de calcul 30 utilise pour ce faire une fonction d'appartenance dite « réelle » F du paramètre de conduite Li à cet ensemble flou, cette fonction d'appartenance réelle F étant spécifique du conducteur du véhicule, à l'instant t. Autrement dit, l'unité de calcul 30 détermine, pour le conducteur, le degré d'appartenance P de chaque paramètre de conduite Li à l'ensemble flou Az respectif correspondant, à l'instant t, à partir de chaque fonction d'appartenance réelle F caractéristique de ce conducteur, et de la valeur Li(t) de chaque paramètre de conduite Li, déterminée audit instant t.

Pour ce faire, l'unité de calcul 30 détermine chaque fonction d'appartenance réelle F caractéristique du conducteur à partir d'une fonction d'appartenance de référence Fréf dudit paramètre Li à l'ensemble flou Az correspondant et d'une répartition statistique des valeurs possibles qu'est susceptible de prendre le paramètre de conduite Li en question.

Chaque fonction d'appartenance de référence Fréf de chaque paramètre est enregistrée dans l'unité de mémoire 10. Chaque fonction d'appartenance de référence est obtenue par calibration, une fois pour toute, pour un conducteur de référence fictif représentant au moins 6000 roulages d'une population choisie sur différents véhicules. En variante, les 6000 roulages pourraient être opérés par la population choisie, sur un même véhicule (même modèle de véhicule).

Plus précisément, pour établir chaque fonction d'appartenance de référence Fréf de chaque paramètre de conduite Li à l'ensemble flou Az considéré, on établit une table de calibration, en plusieurs points, de valeurs calibrées du paramètre de conduite Li avec leurs degrés d'appartenance P respectifs à l'ensemble flou Az. On cherche ensuite la meilleure fonction permettant de relier les différents points calibrés établis. Pour chaque valeur numérique prise par le paramètre de conduite Li, on interpole alors à l'intérieur de la table pour obtenir le degré d'appartenance P correspondant.

En pratique, les fonctions d'appartenance de référence Fréf peuvent avoir diverses formes, triangulaire, trapézoïdale, gaussienne ou sigmoïdes par exemple.

On a par exemple représenté sur les figures 5 à 7 trois fonctions d'appartenance de référence Fréf d'un paramètre de conduite Li à un ensemble flou Az correspondant. La fonction d'appartenance de référence Fréf représentée sur la figure 5 présente trois sections distinctes, une première section rectiligne constante de pente nulle dans laquelle toutes les valeurs du paramètre de conduite Li inférieures à une première valeur Imin sont associées à un même degré d'appartenance minimum Pmin à l'ensemble flou Az, une deuxième section rectiligne à pente positive dans laquelle chaque valeur du paramètre de conduite Li comprise entre ladite première valeur Imin et une deuxième valeur Imax est associée à son propre degré d'appartenance Préf audit ensemble flou Az, et une troisième section rectiligne constante de pente nulle dans laquelle toutes les valeurs du paramètre de conduite Li supérieures à ladite deuxième valeur Imax sont associées à un même degré d'appartenance maximum Pmax audit ensemble flou Az.

Une telle fonction d'appartenance de référence Fréf représente par exemple la fonction d'appartenance de référence du paramètre L11 « temps de passage de la pédale de frein à la pédale d'accélérateur » à l'ensemble flou « temps de passage lent ». Dans ce cas, pour toutes les valeurs de temps de passage inférieures ou égales à 0,5 seconde (Imin = 0,5secondes), le degré d'appartenance à l'ensemble flou « temps de passage lent » est fixé à 0,1 (Pmin = 0,1), pour toutes valeurs de temps de passage supérieures ou égales à 5 secondes (Imax = 5 secondes), le degré d'appartenance à l'ensemble flou « temps de passage lent » est fixé à 0,9 (Pmax=0,9), et pour toutes valeurs intermédiaires comprises entre 0,5 seconde et 5 secondes, le degré d'appartenance croit linéairement avec une pente d'environ 0,18 s$^{-1}$.

Ici, les fonctions d'appartenance de référence Fréf représentées sur les figures 6 et 7 présentent la même allure que celle représentée sur la figure 5.

La répartition statistique des valeurs possibles pour chaque paramètre de conduite Li est elle aussi enregistrée dans l'unité de mémoire 10. Cette répartition statistique donne au moins la moyenne MOY des valeurs possibles dudit paramètre de conduite Li, et la distribution statistique des autres valeurs autour de cette moyenne MOY.

Ici, la répartition statistique des valeurs possibles pour chaque paramètre de conduite Li est une répartition graphique sous forme d'une courbe de Gauss G(Li) qui fournit la densité de probabilité associée à chaque valeur dudit paramètre pour le conducteur du véhicule.

En pratique, la courbe de Gauss associée à chaque paramètre de conduite, pour le conducteur du véhicule, est obtenue par un calcul de moyenne arithmétique et d'écart-type d'au moins 1000 valeurs dudit paramètre, déterminées lors de la conduite du véhicule par ce conducteur. Cette courbe de Gauss G(Li) permet de visualiser la répartition des valeurs du paramètre de conduite Li, c'est-à-dire la probabilité de chaque valeur d'être obtenue, pour ce conducteur.

Le calcul de la moyenne arithmétique et de l'écart-type est respectivement donné par les formules mathématiques fournies ci-dessous.

[Math. 1]

$$\overline{x_N} = \frac{1}{N}\sum_{k=0}^{N} x_k$$

Les termes de cette formule sont explicités ci-dessous.

[Math. 2]

$$\sigma_N = \sqrt{\frac{1}{N}\sum_{k=0}^{N}(x_k - \overline{x_N})^2}$$

Dans les deux formules données ci-dessus,

N est le nombre d'échantillon, c'est-à-dire le nombre de valeurs acquises du paramètre de conduite Li étudié ;
$x_k$ est la k-ième valeur acquise du paramètre de conduite Li ;
$\overline{x_N}$ est la moyenne arithmétique de l'ensemble des N valeurs acquises du paramètre de conduite Li ;
$\sigma_N$ est l'écart-type des N valeurs acquises du paramètre de conduite Li, c'est-à-dire une mesure de la dispersion des N valeurs autour de leur moyenne arithmétique $\overline{x_N}$.

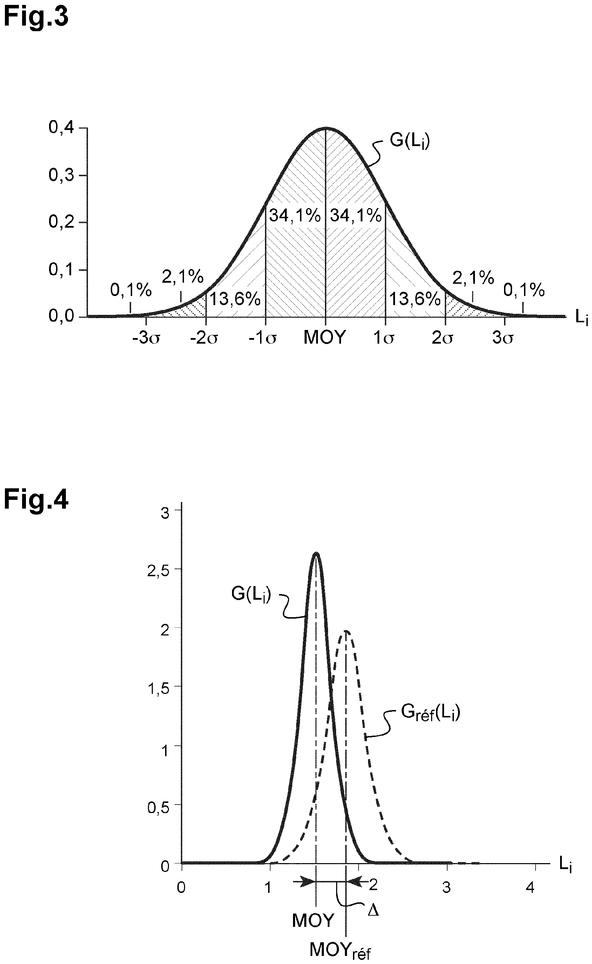

On a par exemple représenté sur la figure 3 une telle courbe de Gauss G(Li), centrée sur la valeur moyenne MOY du paramètre de conduite Li (MOY est ici la moyenne arithmétique de toutes les valeurs acquises du paramètre), pour le conducteur. Selon les paramètres de conduite Li, la courbe de Gauss sera plus ou moins étroite pour le conducteur, c'est-à-dire que les valeurs de chaque paramètre de conduite Li seront plus ou moins écartées de la valeur moyenne MOY du paramètre de conduite Li. Bien entendu, les courbes de Gauss sont propres à chaque conducteur, et la courbe de Gauss G(Li) d'un même paramètre de conduite pour un conducteur sera différente de celle d'un autre conducteur. Plus le conducteur a un comportement reproductible (ou répétable), plus la courbe de Gauss G(Li) de chacun des paramètres Li sera resserrée. Au contraire, si le conducteur n'a pas un comportement reproductible (répétable), comme cela peut être le cas des jeunes conducteurs par exemple, la courbe de Gauss G(Li) de chacun des paramètres Li sera évasée.

En pratique, l'unité de calcul 30 ajuste la répartition statistique des valeurs associées au paramètre de conduite Li en y incorporant la valeur Li(t) dudit paramètre Li, déterminée à l'instant t donné. Cet ajustement se fait donc au fur et à mesure d'un même roulage du véhicule, et au fur et à mesures de l'ensemble des roulages du véhicule par le conducteur.

Ici, l'unité de calcul 30 ajuste la courbe de Gauss G(Li) associée à chaque paramètre de conduite Li en incorporant au calcul de la moyenne arithmétique et de l'écart-type dudit paramètre la valeur Li(t) du paramètre Li déterminée à chaque instant t donné.

Dans une version sophistiquée du dispositif 1 selon l'invention, il est envisageable que l'unité de calcul 30 comporte un filtre pour éliminer les valeurs Li(t) du paramètre Li, qui ne sont pas atteignables. Autrement dit, grâce au filtre, il est possible pour l'unité de calcul 30 de ne pas tenir compte de certaines valeurs qui sont mesurées par erreur par l'unité de mesure 10. Pour ce faire, le filtre met en oeuvre une comparaison de la valeur mesurée à des valeurs de référence enregistrées dans l'unité de mémoire 10. Par exemple, dans le cas du paramètre L11, « temps de passage entre la pédale de frein et d'accélérateur », la valeur mesurée L11(t) n'est utilisée que si elle est comprise entre deux valeurs extrêmes, une valeur minimale en dessous de laquelle il est physiologiquement impossible de descendre, et une valeur maximale au-delà de laquelle le temps de passage d'une pédale à l'autre serait tellement lent qu'il en serait dangereux.

Ici, pour incorporer les valeurs acquises des paramètres de conduite Li au fur et à mesure du temps dans la courbe de Gauss, l'unité de calcul 30 utilise les formules mathématiques suivantes.

$$[\text{Math. 3}]$$

$$\overline{x_{N+1}} = \frac{N}{N+1}\overline{x_N} + \frac{1}{N+1}x_{N+1}$$

Les termes de cette formule sont explicités ci-dessous.

$$[\text{Math. 4}]$$

$$\sigma_{N+1} = \sqrt{\frac{N}{N+1}\sigma_N^2 + \frac{1}{N+1}(x_{N+1} + \overline{x_{N+1}})^2}$$

Dans les deux formules données ci-dessus,

N est le nombre d'échantillon retranché de 1, c'est-à-dire le nombre de valeurs acquises du paramètre de conduite Li étudié retranché de 1 ;

$x_{N+1}$ est la valeur du paramètre de conduite à ajouter à la moyenne glissante $\overline{x_N}$ des valeurs déjà acquises de ce paramètre de conduite Li ;

$\overline{x_N}$ est la moyenne arithmétique glissante de l'ensemble des N valeurs acquises du paramètre de conduite Li ;

$\overline{x_{N+1}}$ est la nouvelle moyenne glissante du paramètre de conduite Li calculée en fonction de la précédente moyenne glissante $\overline{x_N}$ et de la nouvelle valeur acquise $x_{N+1}$ du paramètre de conduite ;

$\sigma_N$ est l'écart type du paramètre de conduite Li établi sur les N dernières valeurs acquises ;

$\sigma_{N+1}$ est le nouvel écart type calculé en fonction de l'écart type précédent $\sigma_N$ et de la nouvelle valeur acquise $x_{N+1}$.

La répartition statistique ajustée pour chaque paramètre de conduite Li, à savoir ici la courbe de Gauss G(Li) ajustée de chaque paramètre, est enregistrée dans l'unité de mémoire 10 après chaque ajustement, en remplacement de la répartition statistique précédant l'acquisition de la dernière valeur dudit paramètre.

Pour déterminer la fonction d'appartenance réelle F de chaque paramètre de conduite Li à l'ensemble flou auquel il est associé dans la prémisse, pour le conducteur du véhicule, l'unité de calcul 30 est adaptée à utiliser une première technique. Selon cette première technique, l'unité de calcul 30 décale, selon l'axe des abscisses, la fonction d'appartenance de référence Fréf de ce paramètre de conduite Li à cet ensemble flou d'une valeur égale à l'écart Δ entre la moyenne MOY des valeurs acquises du paramètre Li pour le conducteur et la moyenne de référence MOYréf des valeurs du paramètre Li pour le conducteur de référence.

Cet ajustement permet de tenir compte du comportement individuel du conducteur, qui peut s'écarter du comportement typique du conducteur de référence.

Ici, l'écart Δ entre lesdites moyennes est lu graphiquement, en comparant la courbe de Gauss ajustée G(Li) du paramètre Li pour le conducteur et une courbe de Gauss de référence Gref(Li) dudit paramètre Li pour le conducteur de référence. La courbe de Gauss de référence Gref(Li) du paramètre Li est obtenue une fois pour toute pour le conducteur de référence, grâce aux formules de moyenne arithmétique et d'écart-type données précédemment.

La figure 4 illustre par exemple un possible décalage entre la courbe de Gauss ajustée G(Li) du paramètre Li pour le conducteur et la courbe de Gauss de référence Gréf(Li) de ce paramètre Li. Sur cette figure 4, si on considère que le paramètre associé aux courbes de Gauss représentées est le temps de passage entre la pédale de frein et la pédale d'accélérateur L11, on remarque que le conducteur de référence est plus lent que le conducteur du véhicule, c'est-à-dire que le temps de passage moyen MOYréf de la pédale de frein à la pédale d'accélérateur pour le conducteur de référence est supérieur au temps de passage moyen MOY entre lesdites pédales pour le conducteur du véhicule. Ici, on peut par exemple estimer que le conducteur est en moyenne plus rapide de 0,35seconde par rapport au conducteur de référence pour passer de la pédale de frein à la pédale d'accélérateur.

Une fois que l'unité de calcul 30 a déterminé l'écart Δ entre lesdites moyennes (Δ=MOYréf-MOY), elle reporte cet écart Δ sur la fonction d'appartenance de référence, de manière à obtenir la fonction d'appartenance F réelle. La fonction d'appartenance F réelle est une translation de Δ de la fonction d'appartenance de référence Fréf, le long de l'axe des abscisses.

Comme le montre la figure 5, le décalage sur l'axe des abscisses de la fonction d'appartenance de référence Fréf revient à décaler les première et deuxième valeurs Imin et Imax du paramètre de conduite Li entre lesquelles le degré d'appartenance évolue linéairement.

Ainsi, dans l'exemple précité du paramètre de temps de passage de la pédale de frein à la pédale d'accélérateur L11, si l'écart Δ entre les moyennes est de l'ordre 0,35s, c'est-à-dire que le conducteur du véhicule est en moyenne plus rapide de 0,35 seconde par rapport au conducteur de référence pour passer de la pédale de frein à la pédale d'accélérateur, alors la courbe F est translatée vers la droite, vers les temps élevés, car le conducteur du véhicule est plus rapide que le conducteur de référence. En pratique, la valeur du paramètre L11 en dessous de laquelle le degré d'appartenance à l'ensemble flou « temps de passage lent » est fixé à 0,1 (Pmin = 0,1) pour le conducteur est supérieure de Δ = 0,35 seconde à la valeur Imin établie pour le conducteur de référence. Similairement, la valeur du paramètre L11 au-dessus de laquelle le degré d'appartenance à l'ensemble flou « temps de passage lent » est fixé à 0,9 (Pmax = 0,9) pour le conducteur est supérieure de Δ = 0,35 seconde à la valeur Imax établie pour le conducteur de référence. En revanche, entre lesdites valeurs Imin et Imax, la pente de la courbe de la fonction d'appartenance réelle F reste identique à celle de la fonction d'appartenance de référence Fréf (environ 0,18s$^{-1}$).

Autrement dit, comme le montre la figure 5, si le conducteur de référence est plus lent que le conducteur, pour une même valeur Li(t) du paramètre de conduite, le degré d'appartenance Préf à l'ensemble flou « temps de passage lent » pour le conducteur de référence est supérieur au degré d'appartenance P à l'ensemble flou « temps de passage lent » pour le conducteur. Par exemple, pour un temps de passage de 1 seconde entre la pédale de frein et la pédale d'accélérateur, le degré d'appartenance à l'ensemble flou « temps de passage lent » pour le conducteur de référence est de l'ordre de 0,4, alors qu'il est de l'ordre de 0,3 pour le conducteur.

De manière avantageuse, l'ajustement dynamique de la courbe de Gauss G(Li) de chaque paramètre Li permet à l'unité de calcul 30 d'être plus précise lorsqu'elle utilise la première technique pour déterminer la fonction d'appartenance réelle F de chaque paramètre Li à l'ensemble flou Az respectif auquel il est susceptible d'appartenir. En effet, la moyenne arithmétique MOY des valeurs du paramètre étant ajustée au fur et à mesure des roulages, cette moyenne est plus précise, et de ce fait, le calcul de Δ est lui aussi plus précis.

Pour déterminer la fonction d'appartenance réelle F de chaque paramètre de conduite Li à l'ensemble flou auquel il est associé dans la prémisse, pour le conducteur du véhicule, l'unité de calcul 30 est aussi adaptée à utiliser une deuxième technique. Selon cette deuxième technique, l'unité de calcul 30 modifie la pente de la fonction d'appartenance de référence Fréf en fonction de la position de la valeur Li(t) du paramètre de conduite Li à l'instant t dans la répartition statistique des valeurs de ce paramètre.

Pour déterminer la « position de la valeur Li(t) du paramètre » dans la répartition statistique du paramètre Li, l'unité de calcul 30 compare la valeur Li(t) à l'écart-type des valeurs de ce paramètre Li. En pratique, l'unité de calcul 30 calcule le rapport entre la valeur mesurée Li(t) et l'écart-type. Cette comparaison peut éventuellement être effectuée de manière indirecte, à l'aide de la courbe de Gauss G(Li) ajustée, en comparant la densité de probabilité de la valeur Li(t) mesurée et la densité de probabilité de la valeur moyenne MOY pour déduire, en unité d'écart-type, ce que vaut la valeur Li(t) mesurée.

L'unité de calcul 30 détermine ensuite la pente de la fonction d'appartenance F réelle du paramètre Li à l'ensemble flou considéré, en fonction de ladite position de la valeur Li(t) mesurée. Cet ajustement de la pente de la fonction d'appartenance permet de tenir compte du comportement instantané du conducteur, qui s'écarte plus ou moins du comportement habituel de ce conducteur.

Ici par exemple, l'unité de calcul 30 détermine la fonction d'appartenance réelle F du paramètre de conduite Li à l'ensemble flou Az correspondant en modifiant la pente de la fonction d'appartenance de référence Fréf de ce paramètre à cet ensemble flou en fonction de la densité de probabilité de la valeur Li(t) du paramètre, déterminée à l'instant t, ladite densité de probabilité étant lue par l'unité de calcul 30 sur la courbe de Gauss ajustée G(Li) de ce paramètre Li.

Pour illustrer cette deuxième technique de détermination de la fonction d'appartenance réelle F à partir de la fonction d'appartenance de référence Fréf, on considère que le comportement moyen (ou habituel) du conducteur est identique au comportement moyen du conducteur de référence, c'est-à-dire que la moyenne MOY des valeurs prises par le paramètre Li, lue sur de la courbe de Gauss G(Li) du paramètre Li pour le conducteur, est identique à la moyenne de référence MOYréf des valeurs prises par ce paramètre Li, lue sur la courbe de Gauss de référence Gréf(Li) de ce paramètre Li pour le conducteur de référence.

En pratique, plus la valeur Li(t) du paramètre, mesurée à l'instant t, est éloignée de la valeur moyenne MOY de ce paramètre, en unité d'écart-type, plus la pente de la fonction d'appartenance réelle F déterminée par l'unité de calcul 30 s'écarte de celle de la fonction d'appartenance de référence Fréf, et plus le degré d'appartenance minimal Pmin et/ou le degré d'appartenance maximal Pmax à l'ensemble flou considéré seront différents des degrés d'appartenance minimal et maximal de référence.

La figure 6 illustre un tel ajustement de pente de la fonction d'appartenance en fonction de la position de la valeur Li(t) du paramètre dans la répartition statistique de ce paramètre Li. Sur cette figure 6 sont représentées différentes fonctions d'appartenance du paramètre L11 « temps de passage de la pédale d'accélérateur à la pédale de frein » à l'ensemble flou « temps de passage lent ». Sur cette figure 6, la fonction d'appartenance F1 est celle qui correspond à une valeur L11(t) égale à deux fois l'écart-type ($+2\sigma$), la fonction d'appartenance F2 est celle qui correspond à une valeur L11(t) égale à une fois l'écart-type ($+1\sigma$), la fonction d'appartenance F3 est celle qui correspond à une valeur L11(t) égale à moins une fois l'écart-type ($-1\sigma$), et la fonction d'appartenance F4 est celle qui correspond à une valeur L11(t) égale à moins deux fois l'écart-type ($-2\sigma$).

Sur la figure 6, la valeur Imin en dessous de laquelle le degré d'appartenance à l'ensemble flou « temps de passage lent » est minimal Pmin, et la valeur Imax au-dessus de laquelle le degré d'appartenance à l'ensemble flou « temps de passage lent » est maximal Pmax restent identiques pour toutes les fonctions d'appartenance Fréf, F1, F2, F3 et F4. En revanche, le degré d'appartenance maximal Pmax audit ensemble flou « temps de passage lent » diffère pour chaque fonction d'appartenance Fréf, F1, F2, F3 et F4, et la rapidité avec laquelle ce degré d'appartenance maximal Pmax peut être atteint n'est pas la même non plus.

Ici, lorsque la valeur L11(t) du paramètre de conduite Li à l'instant t s'écarte de $-2\sigma$ par rapport à la valeur moyenne MOY du paramètre, cela signifie que le conducteur est extrêmement rapide pour passer de la pédale de frein à la pédale d'accélérateur, par rapport à son comportement habituel moyen. L'unité de calcul 30 interprète cela comme le désir du conducteur d'augmenter le caractère sportif de sa conduite. De ce fait, l'unité de calcul 30 détermine la fonction d'appartenance réelle F4 pour que le degré d'appartenance maximal du paramètre L11 à l'ensemble flou « temps de passage lent » soit nettement inférieur au degré d'appartenance maximal de référence de ce même paramètre L11 à ce même ensemble flou « temps de passage lent ». Ainsi, en utilisant la fonction d'appartenance réelle F4 plutôt que la fonction d'appartenance Fréf, pour la valeur Li(t) du paramètre de conduite mesurée à l'instant t, l'unité de calcul 30 tient compte du fait que le conducteur est plus rapide qu'à l'accoutumée, ce qui se traduit par le fait que le degré d'appartenance P4 de ce paramètre L11 à l'ensemble flou « temps de passage lent » est inférieur au degré d'appartenance Préf habituel de ce même paramètre L11 à ce même ensemble flou.

A l'inverse, lorsque la valeur L11(t) du paramètre de conduite, à l'instant t, s'écarte de $+2\sigma$ par rapport à la valeur moyenne MOY de ce paramètre L11, cela signifie que le conducteur est extrêmement lent pour passer de la pédale de frein à la pédale d'accélérateur, par rapport à son comportement habituel. L'unité de calcul 30 interprète cela comme le désir du conducteur d'augmenter le caractère souple de la conduite. De ce fait, l'unité de calcul 30 détermine la fonction d'appartenance réelle F1 pour que le degré d'appartenance maximal du paramètre L11 à l'ensemble flou « temps de passage lent » soit nettement supérieur au degré d'appartenance maximal de référence de ce même paramètre L11 à ce même ensemble flou « temps de passage lent ». Ainsi, en utilisant la fonction d'appartenance réelle F1 plutôt que la fonction d'appartenance de référence Fréf, l'unité de calcul 30 tient compte du fait que le conducteur est plus lent qu'à l'accoutumée, ce qui se traduit par le fait que le degré d'appartenance P1 du paramètre L11 à l'ensemble flou « temps de passage lent » pour le conducteur est bien supérieur au degré d'appartenance Préf habituel de ce même paramètre L11 à ce même ensemble flou « temps de passage lent ».

en va de même des fonctions d'appartenance réelles F2 et F3 qui traduisent respectivement un désir d'un peu plus de sportivité ou d'un peu plus de souplesse de la part du conducteur par rapport à son comportement habituel, et pour lesquels les degrés d'appartenance respectifs P2 et P3 sont adaptés en conséquence.

Nous avons ici décrit quatre fonctions d'appartenance réelles pour quatre valeurs typiques du paramètre Li ($-2\sigma$, $-\sigma$, $+\sigma$ et $+2\sigma$) mais il peut bien entendu y avoir plus de fonctions d'appartenance réelles ajustées, basées sur des écarts entre la valeur mesurée et la valeur moyenne MOY, évalués en unité d'écart-type.

De manière avantageuse, l'ajustement dynamique de la courbe de Gauss G(Li) de chaque paramètre Li au fur et à mesure des roulages permet à l'unité de calcul 30 d'être plus précise lorsqu'elle utilise la deuxième technique pour déterminer la fonction d'appartenance réelle F de chaque paramètre Li à l'ensemble flou Az auquel il est susceptible d'appartenir. En effet, avec la deuxième technique, l'unité de calcul 30 rapporte la valeur mesurée Li(t) du paramètre Li en unité d'écart-type ($\sigma$), or une courbe de Gauss G(Li) resserrée présente un écart-type faible, tandis qu'une courbe de Gauss G(Li) évasée présente un écart-type élevé. Une même valeur mesurée Li(t) d'un paramètre ne représentera pas la même grandeur, en unité d'écart-type, dans une courbe de Gauss resserrée et dans une courbe de Gauss évasée. La pente de la fonction d'appartenance réelle F ne sera donc pas la même, pour une même valeur mesurée Li(t) du paramètre, selon que ledit paramètre est associée à une courbe de Gauss évasée ou à une courbe de Gauss resserrée.

En pratique, les deux techniques présentées précédemment utilisées par l'unité de calcul 30 pour déterminer la fonction d'appartenance réelle F de chaque paramètre de conduite Li à l'ensemble flou auquel il est associé dans la prémisse peuvent se cumuler. La figure 7 illustre cette double correction de la fonction d'appartenance de référence Fréf pour obtenir la fonction d'appartenance réelle F, d'abord en décalant la fonction d'appartenance de référence Fréf le long de l'axe des abscisses d'une valeur égale à l'écart $\Delta$ entre les moyennes lues respectivement sur la courbe de Gauss G(Li) du conducteur et la courbe de Gauss de référence Gréf(Li), puis en ajustant la pente de la fonction d'appartenance en fonction de la densité de probabilité de la valeur du paramètre mesurée à l'instant t.

L'unité de calcul 30 pondère ensuite le mode de conduite prédéterminé Mn(P) résultant de la règle Rx de logique floue, à partir dudit degré d'appartenance P évalué avec la fonction d'appartenance réelle F adéquate.

Plus précisément, lorsqu'une règle Rx ne comporte qu'une prémisse, l'unité de calcul 30 choisi le facteur de pondération du mode de conduite Mn résultant de cette règle Rx égal au degré d'appartenance P du paramètre de conduite Li à l'ensemble flou considéré dans la prémisse. Lorsqu'une règle de conduite Rx comporte plusieurs prémisses, l'unité de calcul 30 choisi le facteur de pondération du mode de conduite Mn résultant de cette règle de conduite Rx égal au degré d'appartenance P le plus faible de l'ensemble des degrés d'appartenance déterminés pour les prémisses de cette règle. Cette pondération est représentée par le symbole Mn(P) dans les figures 1 et 2.

Par exemple, pour la règle R1, le mode de conduite résultant M1 est pondéré par le facteur de pondération P donné sur la figure 5, ou par l'un des facteurs de pondérations P1, P2, P3, P4 qui est donné sur la figure 6, ou par l'un des facteurs de pondération P, P1, P2, P3, P4 qui est donné sur la figure 7, en fonction de l'ajustement choisi pour la fonction d'appartenance réelle F, cet ajustement dépendant lui-même de la valeur L11(t) mesurée à l'instant t.

Pour pondérer le mode de conduite résultant de la règle R4, l'unité de calcul 30 prend le plus petit facteur de pondération obtenu par lecture respective des fonctions d'appartenance réelles suivantes : la fonction d'appartenance de l'angle de pédale d'accélérateur L1 à l'ensemble flou « angle élevé » et la fonction d'appartenance du rapport de boîte de vitesses L5 à l'ensemble flou « rapport intermédiaire ».

Cette pondération de chaque mode de conduite résultant de chaque règle Rx de logique floue est ensuite utilisée par l'unité de commande 40 pour reconnaître le mode de conduite du véhicule par le conducteur, parmi les modes de conduite prédéterminés.

Plus précisément, à l'étape c), l'unité de commande 40 reconnaît le mode de conduite du véhicule par le conducteur, à l'instant t donné, par un calcul de centre de gravité basé sur les modes de conduite pondérés Mn(P) résultant de chaque règle Rx de logique floue. L'unité de commande 40 est pour cela munie d'un calculateur. En pratique, l'unité de commande 40 comprend son propre calculateur 41 (voir figure 2), ou fait appel à l'unité de calcul 30 en tant que calculateur.

On représente sur un graphique tel que celui de la figure 8, en abscisse, le degré de sportivité du conducteur, et en ordonnée la pondération P de chaque mode de conduite pondéré Mn(Px) résultant de chaque règle Rx de logique floue.

Plus précisément, on représente les différents modes de conduite du véhicule, ici les modes M1, M2 et M3 en fonction du degré de sportivité du conducteur. En pratique, chaque mode de conduite Mn présente une largeur fixe calibrée arbitrairement. De préférence, les largeurs de tous les modes de conduite Mn sont identiques. Ici, on notera X1, X2 et X3 les bornes de chaque mode de conduite M1, M2 et M3, de sorte que le mode de conduite sportif M1 présente la largeur X3-X2, le mode de conduite souple M3 présente la largeur X1 et le mode de conduite intermédiaire présente la largeur X2-X1 (voir figure 8).

Chaque règle Rx de logique floue est ensuite représentée, avec la pondération correspondante, dans le domaine qui convient. Cette représentation de la règle est par exemple un rectangle dont la hauteur correspond à la pondération Px associée audit mode de conduite Mn résultant de la règle Rx, et dont la largeur correspond au domaine représentant ledit mode de conduit Mn. L'aire du rectangle représentée est donc égale à Px * Ai où Ai est la largeur du domaine.

L'unité de commande 40, à l'aide du calculateur 41 ; 30, détermine ensuite le barycentre Gx, ou centre de gravité, de chacun des rectangles, puis l'abscisse $X_G$ du centre de gravité global G de l'ensemble des rectangles. En fonction de la position de l'abscisse du centre de gravité par rapport au domaine des modes de conduite Mn du véhicule, l'unité de commande 40 déduit le mode de conduite du véhicule par le conducteur.

En pratique, les centres de gravité Gx de chacun des rectangles ont tous pour abscisse $X_i$ le milieu du domaine,

soit $X_1/2$ pour les règles Rx dont le résultat est le mode de conduite souple M3, (X1+X2)/2 pour les règles Rx dont le résultat est le mode de conduite est le mode de conduite intermédiaire M2, et (X2+X3)/2 pour les règles Rx dont le résultat est le mode de conduite est le mode de conduite sportif M1.

Pour calculer l'abscisse du centre de gravité $X_G$ de l'ensemble des rectangles, l'unité de commande utilise la formule mathématique suivante.

[Math. 5]

$$X_G = \frac{\sum_{i=1}^{x} X_i * A_i}{\sum_{i=1}^{x} A_i}$$

Dans cette formule,

Xi représente l'abscisse du barycentre associé au rectangle représentant le mode de conduite pondéré Mn(Pi) résultant de la règle Ri ; et,
Ai représente la largeur du rectangle représentant le mode de conduite pondéré Mn(Pi) résultant de la règle Ri, c'est-à-dire la largeur du domaine dudit mode de conduite Mn.

Si $X_G$ est comprise entre 0 et X1, le mode de conduite du véhicule par le conducteur est souple (M3), si $X_G$ est comprise entre X1 et X2, le mode de conduite du véhicule par le conducteur est intermédiaire (M2) et si $X_G$ est comprise entre X2 et X3, le mode de conduite du véhicule par le conducteur est sportif (M1).

Procédé

Sur la figure 1, on a représenté les étapes principales du procédé selon l'invention.

Selon ce procédé le mode de conduite du véhicule par le conducteur est reconnu par l'unité de commande 40 parmi une pluralité de modes de conduite prédéterminés Mn.

Lors d'une étape a) du procédé, représentée par la case E1 de la figure 1, il est prévu d'établir ladite au moins une règle Rx de logique floue associant, en entrée, au moins une prémisse au sujet de l'appartenance d'un des paramètres de conduite Li du véhicule à un ensemble flou Az, et, en sortie, un des modes de conduite prédéterminés Mn.

Lors d'une étape b), l'unité de calcul 30 pondère, pour chaque règle Rx de logique floue établie, le mode de conduite prédéterminé Mn résultant de ladite règle Rx de logique floue, en mettant en oeuvre les sous-étapes b1) à b5) suivantes.

Lors d'une sous-étape b1), représentée par la case E2 sur la figure 1, l'unité de mesure 20 détermine, à l'instant t donné, une valeur Li(t) de chaque paramètre Li intervenant dans chaque prémisse, chaque paramètre Li étant associé, d'une part, à une fonction d'appartenance de référence Fréf dudit paramètre Li audit ensemble flou correspondant, et, d'autre part, à une répartition statistique G(Li) des valeurs possibles dudit paramètre de conduite pour le conducteur.

Lors d'une sous-étape b2), l'unité de calcul 30 ajuste la répartition statistique G(Li) des valeurs associées à chaque paramètre intervenant dans chaque prémisse en y incorporant la valeur Li(t) dudit paramètre Li déterminée à l'instant t donné.

Lors d'une sous-étape b3), représentée par la case E3 dans la figure 1, l'unité de calcul 30 détermine, pour le conducteur à l'instant t donné, la fonction d'appartenance réelle F de chaque paramètre Li intervenant dans chaque prémisse à l'ensemble flou Az correspondant, à l'aide de la fonction d'appartenance de référence Fréf et de la répartition statistique ajustée G(Li) des valeurs dudit paramètre.

Lors d'une sous-étape b4), représentée par la case E4 dans la figure 1, l'unité de calcul 30 détermine, un degré d'appartenance P dudit paramètre Li à l'ensemble flou Az correspondant, à partir de ladite fonction d'appartenance réelle F et de la valeur Li(t) du paramètre Li déterminée audit instant t donné.

Lors d'une sous-étape b5), représentée par la case E5 dans la figure 1, l'unité de calcul 30 pondère le mode de conduite prédéterminé Mn résultant de la règle Rx de logique floue, à partir dudit degré d'appartenance P.

Lors d'une étape c), l'unité de commande 40 reconnaît le mode de conduite Mn(t) du véhicule, par le conducteur, à l'instant t donné, à partir de chaque mode de conduite pondéré Mn(P) résultant de chaque règle de logique floue.

On comprend facilement comment sont mises en oeuvre les étapes du procédé à partir de la description du dispositif 1 et quelles sont les caractéristiques de chacune de ses étapes.

Grâce à la présente invention il est possible d'avoir un mode de conduite souple sur un véhicule conçu pour être sportif, tout en préservant son caractère sportif lorsque le conducteur le souhaite. Cette possibilité est due à la reconnaissance du mode de conduite du conducteur à tout moment grâce à la théorie de la logique floue. Cette logique floue autorise la prise de décisions avec nuance et précision à partir d'informations mesurables, et son codage est compatible avec le fonctionnement d'un calculateur électronique de contrôle moteur. Grâce à l'ensemble des règles Rx de logique floue précédemment décrites, il est possible de reconnaître rapidement, en quelques secondes seulement, le mode de conduite du conducteur parmi des modes préalablement identifiés, dans le but d'agir sur la progressivité des commandes des unités de conduite en fonction des stimulations du conducteur sur les organes de commande.

Variantes

La présente invention n'est nullement limitée aux modes de réalisation décrits et représentés, mais l'homme du métier saura y apporter toute variante conforme à l'invention.

Notamment, plutôt que la méthode dite des barycentres, l'unité de commande peut utiliser la méthode dite des « moyennes des maximums ou du maximum », ou encore la méthode dite « des moindres carrés » pour synthétiser les modes de conduite pondérés obtenus de chaque règle de logique floue et déduire le mode de conduite du véhicule par le conducteur à l'instant donné.

Plutôt que de prévoir que chaque prémisse fait intervenir un seul paramètre de conduite et un seul ensemble flou, il serait en variante envisageable de prévoir que certaines prémisses fassent intervenir plusieurs paramètres de conduite et plusieurs ensembles flous. Dans ce cas, les fonctions d'appartenance des paramètres de conduite aux ensembles flous respectifs correspondants sont plus complexes.

faut bien noter que le dispositif et/ou le procédé conforme à l'invention sont adaptés aussi bien à un véhicule automobile à boite de vitesses automatique qu'à boîte de vitesse manuelle.

Par ailleurs, le dispositif et/ou le procédé conforme à l'invention pourraient, au lieu d'être implantés dans un véhicule automobile, être implantés dans tout type de véhicule tel qu'un train, un bus, un bateau ou encore un avion.

En variante encore, il est envisageable que le procédé et le dispositif selon l'invention soient implantés dans un jeu vidéo.

Il est aussi envisageable, pour améliorer encore la reconnaissance du mode de conduite, de pouvoir identifier le conducteur du véhicule, par exemple au moyen d'un système de reconnaissance, notamment facial, digital, ou par insertion d'une clé correspondante. Il sera alors possible d'apprendre de manière indépendante la manière de conduire de chaque conducteur d'un même véhicule.

En variante encore, la reconnaissance du mode de conduite peut être améliorée en tenant compte du fait que le mode de conduite peut dépendre de la topologie de la route, de la météo, de l'utilisation d'un système de navigation de type GPS ou encore du fait que le conducteur soit seul ou accompagné dans le véhicule. Le comportement du conducteur peut en effet être différent selon qu'il utilise ou non le système de navigation, selon la météo, selon le nombre de passagers du véhicule et les interactions entre le conducteur et lesdits passagers ou entre les passagers eux-mêmes, ou encore selon le type de route sur lequel est engagé le véhicule (route de montagne, autoroute).

**Revendications**

1. Procédé de reconnaissance d'un mode de conduite (Mn(t)) d'un conducteur d'un véhicule, à un instant (t) donné, ledit mode de conduite (Mn(t)) étant reconnu par une unité de commande parmi une pluralité de modes de conduite prédéterminés (Mn), comprenant des étapes :

   a) d'établissement d'au moins une règle (Rx) de logique floue associant, en entrée, au moins une prémisse au sujet de l'appartenance d'un paramètre (Li) de conduite du véhicule à un ensemble flou (Az), et, en sortie, un des modes de conduite prédéterminés (Mn) ;
   b) de pondération par une unité de calcul (30), pour chaque règle (Rx) de logique floue établie, du mode de conduite prédéterminé (Mn) résultant de ladite règle (Rx) de logique floue, en mettant en oeuvre les sous-étapes suivantes :

      b1) détermination par une unité de mesure (20), à l'instant (t) donné, d'une valeur (Li(t)) de chaque paramètre (Li) intervenant dans chaque prémisse, chaque paramètre étant associé, d'une part, à une fonction d'appartenance de référence (Fréf) dudit paramètre (Li) audit ensemble flou (Az) correspondant, et, d'autre part, à une répartition statistique (G(Li)) des valeurs possibles dudit paramètre (Li) pour le conducteur,
      b2) ajustement par l'unité de calcul (30) de la répartition statistique (G(Li)) des valeurs associées à chaque paramètre (Li) intervenant dans chaque prémisse en y incorporant la valeur (Li(t)) dudit paramètre (Li) déterminée à l'instant (t) donné,
      b3) détermination par l'unité de calcul (30), pour le conducteur, à l'instant (t) donné, de la fonction d'appartenance réelle (F) de chaque paramètre (Li) intervenant dans chaque prémisse audit ensemble flou (Az) correspondant, à l'aide de la fonction d'appartenance de référence (Fréf) et de la répartition statistique (G(Li)) ajustée des valeurs dudit paramètre,

b4) détermination par l'unité de calcul (30) d'un degré d'appartenance (P) dudit paramètre (Li) audit ensemble flou (Az) correspondant, à partir de ladite fonction d'appartenance réelle (F) et de la valeur (Li(t)) du paramètre déterminée audit instant (t) donné,

b5) pondération par l'unité de calcul (30) du mode de conduite prédéterminé (Mn) résultant de la règle (Rx) de logique floue à partir dudit degré d'appartenance (P) ; et

c) de reconnaissance par l'unité de commande du mode de conduite (Mn(t)) du véhicule, par le conducteur, à l'instant (t) donné, à partir de chaque mode de conduite pondéré (Mn(P)) résultant de chaque règle (Rx) de logique floue.

2. Procédé selon la revendication 1, selon lequel, à la sous-étape b3), l'unité de calcul (30) détermine la fonction d'appartenance réelle (F) du paramètre (Li) à l'ensemble flou (Az) correspondant en décalant, selon l'axe des abscisses, la fonction d'appartenance de référence (Fréf) de ce paramètre (Li) à cet ensemble flou (Az) d'une valeur égale à l'écart entre la moyenne (MOY) des valeurs du paramètre pour le conducteur et la moyenne de référence (MOYréf) des valeurs du paramètre pour un conducteur de référence.

3. Procédé selon l'une des revendications 1 et 2, selon lequel, à la sous-étape b3), l'unité de calcul (30) détermine la fonction d'appartenance réelle (F) du paramètre (Li) à l'ensemble flou (Az) correspondant en modifiant la pente de la fonction d'appartenance de référence (Fréf) du paramètre à cet ensemble flou en fonction de la position de la valeur (Li(t)) du paramètre (Li), à l'instant donné, dans la répartition statistique des valeurs de ce paramètre (Li).

4. Procédé selon l'une des revendications 1 à 3, selon lequel la répartition statistique des valeurs possibles pour le paramètre (Li) est une courbe de Gauss (G(Li)) fournissant la densité de probabilité associée à chaque valeur dudit paramètre (Li) pour le conducteur.

5. Procédé selon la revendication 4, selon lequel, la courbe de Gauss (G(Li)) associée à chaque paramètre (Li) est obtenue par un calcul de moyenne arithmétique et d'écart-type d'au moins 1000 valeurs dudit paramètre (Li) déterminées lors de la conduite du véhicule par le conducteur.

6. Procédé selon la revendication 5, selon lequel, à la sous-étape b2), l'unité de calcul (30) ajuste la courbe de Gauss (G(Li)) associée à chaque paramètre (Li) au fur et à mesure des conduites du véhicule par le conducteur, en incorporant au calcul de la moyenne arithmétique et de l'écart-type dudit paramètre chaque valeur (Li(t)) du paramètre (Li) déterminée à chaque instant (t) donné.

7. Procédé selon l'une des revendications 1 à 6, selon lequel, à l'étape c) de reconnaissance, l'unité de commande (40) reconnaît le mode de conduite du conducteur du véhicule, à l'instant (t) donné, par un calcul de centre de gravité basé sur les modes de conduite pondérés (Mn(P)) résultants des règles (Rx) de logique floue.

8. Procédé selon l'une des revendications 1 à 7, selon lequel les paramètres (Li) de conduite du véhicule sont les suivants : l'angle de pédale d'accélérateur, la pression de freinage, l'angle de pédale d'embrayage, l'angle volant, le rapport de boîte de vitesse, l'accélération transversale du véhicule, la vitesse du véhicule, le gradient de l'angle de pédale d'accélérateur, la moyenne arithmétique de l'angle de pédale d'accélérateur, le gradient de l'angle volant, et le temps de passage entre le frein et la pédale d'accélérateur.

9. Procédé selon l'une des revendications 1 à 8, selon lequel l'unité de mesure (20) détermine la valeur (Li(t)) du paramètre (Li) de conduite du véhicule directement à l'aide d'un capteur (21) disposé dans le véhicule qui mesure ladite valeur, ou à partir d'un calcul faisant intervenir un autre paramètre de conduite dont la valeur est mesurée à l'aide d'un capteur (21) disposé dans le véhicule.

10. Procédé selon l'une des revendications 1 à 9, selon lequel l'unité de commande (40) reconnaît le mode de conduite parmi les modes de conduite prédéterminés (Mn) suivants : un mode de conduite sportif (M1), un mode de conduite souple (M3) et au moins un mode conduite intermédiaire (M2) entre lesdits modes de conduite souple et sportif (M3, M1).

11. Dispositif (1) de reconnaissance d'un mode de conduite (Mn(t)) d'un conducteur d'un véhicule, à un instant (t) donné, comprenant :

- une unité de mémoire (10) dans laquelle sont mémorisés : une pluralité de modes de conduite prédéterminés (Mn), au moins une règle (Rx) de logique floue associant, en entrée, au moins une prémisse au sujet de l'appartenance d'un paramètre (Li) de conduite du véhicule à un ensemble flou (Az), et, en sortie, un des modes de conduite prédéterminés (Mn) ; et, pour chaque paramètre (Li) de conduite intervenant dans chaque prémisse, une fonction d'appartenance de référence (Fréf) dudit paramètre (Li) à l'ensemble flou (Az) correspondant ainsi qu'une répartition statistique (G(Li)) des valeurs possibles dudit paramètre pour le conducteur,

- une unité de mesure (20) comportant au moins un capteur (21) disposé dans le véhicule, ladite unité de mesure (20) étant adaptée à déterminer, à l'instant (t) donné, la valeur (Li(t)) du paramètre intervenant dans chaque prémisse,

- une unité de calcul (30) adaptée à pondérer le mode de conduite prédéterminé (Mn) résultant de chaque règle (Rx) de logique floue mémorisée, en mettant en oeuvre, pour chaque règle (Rx) de logique floue, les sous-étapes suivantes :

b2) ajustement de la répartition statistique associée à chaque paramètre (Li) intervenant dans chaque prémisse en y incorporant la valeur (Li(t)) dudit paramètre mesurée par l'unité de mesure (20) à l'instant (t) donné,

b3) détermination, à l'instant (t) donné, pour le conducteur, de la fonction d'appartenance réelle (F) de chaque paramètre intervenant dans chaque prémisse à l'ensemble flou correspondant, à l'aide de la fonction d'appartenance de référence (Fréf) et de la répartition statistique (G(Li)) ajustée des valeurs dudit paramètre,

b4) à partir de ladite fonction d'appartenance réelle (F) et de la valeur (Li(t)) du paramètre (Li) déterminée audit instant (t) donné, détermination d'un degré d'appartenance (P) dudit paramètre à l'ensemble flou (Az) correspondant,

b5) pondération du mode de conduite prédéterminé (Mn) résultant de la règle (Rx) de logique floue à partir dudit degré d'appartenance (P) ; et

- une unité de commande (40) adaptée à reconnaître le mode de conduite (Mn(t)) du conducteur du véhicule, à l'instant (t) donné, à partir de chaque mode de conduite pondéré (Mn(P)) résultant de chaque règle (Rx) de logique floue.

## Patentansprüche

1. Verfahren zur Erkennung eines Fahrmodus (Mn(t)) eines Fahrers eines Fahrzeugs, zu einem gegebenen Zeitpunkt (t), wobei der Fahrmodus (Mn(t)) von einer Steuereinheit unter einer Mehrzahl von vorbestimmten Fahrmodi (Mn) erkannt wird, umfassend die Schritte:

a) Aufstellen mindestens einer Fuzzylogik-Regel (Rx), die, im Eingang, mindestens eine Prämisse bezüglich der Zugehörigkeit eines Fahrparameters (Li) des Fahrzeugs zu einer Fuzzymenge (Az) und, im Ausgang, einen der vorbestimmten Fahrmodi (Mn) zuordnet;

b) Gewichten durch eine Recheneinheit (30), für jede aufgestellte Fuzzylogik-Regel (Rx), des vorbestimmten Fahrmodus (Mn), der aus der Fuzzylogik-Regel (Rx) resultiert, indem die folgenden Teilschritte implementiert werden:

b1) Bestimmen durch eine Messeinheit (20), zu dem gegebenen Zeitpunkt (t), eines Werts (Li(t)) jedes Parameters (Li), der in jede Prämisse eingeht, wobei jeder Parameter, zum einen, einer Referenz-Zugehörigkeitsfunktion (Fréf) des Parameters (Li) zu der entsprechenden Fuzzymenge (Az) und, zum anderen, einer statistischen Verteilung (G(Li)) der möglichen Werte des Parameters (Li) für den Fahrer zugeordnet wird,

b2) Anpassen durch die Recheneinheit (30) der statistischen Verteilung (G(Li)) der Werte, die jedem Parameter (Li) zugeordnet sind, der in jede Prämisse eingeht, indem der zu dem gegebenen Zeitpunkt (t) bestimmte Wert (Li(t)) des Parameters darin eingebunden wird,

b3) Bestimmen durch die Recheneinheit (30), für den Fahrer, zu dem gegebenen Zeitpunkt (t), der Ist-Zugehörigkeitsfunktion (F) jedes Parameters (Li), der in jede Prämisse eingeht, zu der entsprechenden Fuzzymenge (Az) mithilfe der Referenz-Zugehörigkeitsfunktion (Fréf) und der um die Werte des Parameters angepassten statistischen Verteilung (G(Li)),

b4) Bestimmen durch die Recheneinheit (30) eines Zugehörigkeitsgrads (P) des Parameters (Li) zu der entsprechenden Fuzzymenge (Az) anhand der Ist-Zugehörigkeitsfunktion (F) und des zu dem gegebenen Zeitpunkt (t) bestimmten Werts (Li(t)) des Parameters,

b5) Gewichten durch die Recheneinheit (30) des vorbestimmten Fahrmodus (Mn), der aus der Fuzzylogik-Regel (Rx) resultiert, anhand des Zugehörigkeitsgrads (P); und

c) Erkennen durch die Steuereinheit des Fahrmodus (Mn(t)) des Fahrzeugs, durch den Fahrer, zu dem gegebenen Zeitpunkt (t) anhand jedes gewichteten Fahrmodus (Mn(P)), der aus jeder Fuzzylogik-Regel(Rx) resultiert.

2. Verfahren nach Anspruch 1, bei dem, in dem Teilschritt b3), die Recheneinheit (30) die Ist-Zugehörigkeitsfunktion (F) des Parameters (Li) zu der entsprechenden Fuzzymenge (Az) bestimmt, indem sie, entlang der Abszissenachse, die Referenz-Zugehörigkeitsfunktion (Fréf) dieses Parameters (Li) zu dieser Fuzzymenge (Az) um einen Wert gleich der Differenz zwischen dem Mittelwert (MOY) der Werte des Parameters für den Fahrer und dem Referenzmittelwert (MOYréf) der Werte des Parameters für einen Referenzfahrer verschiebt.

3. Verfahren nach einem der Ansprüche 1 und 2, bei dem, in dem Teilschritt b3), die Recheneinheit (30) die Ist-Zugehörigkeitsfunktion (F) des Parameters (Li) zu der entsprechenden Fuzzymenge (Az) bestimmt, indem sie die Neigung der Referenz-Zugehörigkeitsfunktion (Fréf) des Parameters zu dieser Fuzzymenge in Abhängigkeit von der Position des Werts (Li(t)) des Parameters (Li), zu dem gegebenen Zeitpunkt, in der statistischen Verteilung der Werte dieses Parameters (Li) ändert.

4. Verfahren nach einem der Ansprüche 1 bis 3, bei dem die statistische Verteilung der möglichen Werte für den Parameter (Li) eine Gaußsche Kurve (G(Li)) ist, die die Wahrscheinlichkeitsdichte angibt, die jedem Wert des Parameters (Li) für den Fahrer zugeordnet ist.

5. Verfahren nach Anspruch 4, bei dem die Gaußsche Kurve (G(Li)), die jedem Parameter (Li) zugeordnet ist, durch eine Berechnung des arithmetischen Mittels und der Standardabweichung von mindestens 1000 Werten des Parameters (Li) erhalten wird, die beim Fahren des Fahrzeugs durch den Fahrer bestimmt werden.

6. Verfahren nach Anspruch 5, bei dem, in dem Teilschritt b2), die Recheneinheit (30) die Gaußsche Kurve (G(Li)), die jedem Parameter (Li) zugeordnet ist, im Zuge des Fahrens des Fahrzeugs durch den Fahrer anpasst, indem sie in die Berechnung des arithmetischen Mittels und der Standardabweichung des Parameters jeden zu jedem gegebenen Zeitpunkt (t) bestimmten Wert (Li(t)) des Parameters (Li) einbindet.

7. Verfahren nach einem der Ansprüche 1 bis 6, bei dem, in dem Schritt c) des Erkennens, die Steuereinheit (40) den Fahrmodus des Fahrers des Fahrzeugs, zu dem gegebenen Zeitpunkt (t), durch eine Schwerpunktberechnung erkennt, die auf den gewichteten Fahrmodi (Mn(P)) basiert, die aus den Fuzzylogik-Regeln (Rx) resultieren.

8. Verfahren nach einem der Ansprüche 1 bis 7, bei dem die Fahrparameter (Li) des Fahrzeugs die folgenden sind: der Gaspedalwinkel, der Bremsdruck, der Kupplungspedalwinkel, der Lenkradwinkel, der Gang, die Querbeschleunigung des Fahrzeugs, die Geschwindigkeit des Fahrzeugs, der Gradient des Gaspedalwinkels, das arithmetische Mittel des Gaspedalwinkels, der Gradient des Lenkradwinkels und die Übergangszeit zwischen der Bremse und dem Gaspedal.

9. Verfahren nach einem der Ansprüche 1 bis 8, bei dem die Messeinheit (20) den Wert (Li(t)) des Fahrparameters (Li) des Fahrzeugs direkt mithilfe eines in dem Fahrzeug angeordneten Sensors (21) bestimmt, der den Wert misst, oder anhand einer Berechnung, in die ein weiterer Fahrparameter eingeht, dessen Wert mithilfe eines in dem Fahrzeug angeordneten Sensors (21) gemessen wird.

10. Verfahren nach einem der Ansprüche 1 bis 9, bei dem die Steuereinheit (40) den Fahrmodus unter den folgenden vorbestimmten Fahrmodi (Mn) erkennt: einem Sport-Fahrmodus (M1), einem Comfort-Fahrmodus (M3) und mindestens einem Zwischenfahrmodus (M2) zwischen den Comfort- und Sport-Fahrmodi (M3, M1).

11. Vorrichtung (1) zur Erkennung eines Fahrmodus (Mn(t)) eines Fahrers eines Fahrzeugs, zu einem gegebenen Zeitpunkt (t), umfassend:

- eine Speichereinheit (10), in der gespeichert sind: eine Mehrzahl vorbestimmter Fahrmodi (Mn) mindestens eine Fuzzylogik-Regel (Rx), die, im Eingang, mindestens eine Prämisse bezüglich der Zugehörigkeit eines Fahrparameters (Li) des Fahrzeugs zu einer Fuzzymenge (Az) und, im Ausgang, einen der vorbestimmten Fahrmodi (Mn) zuordnet; und, für jeden Fahrparameter (Li), der in jede Prämisse eingeht, eine Referenz-Zugehörigkeitsfunktion (Fréf) des Parameters (Li) zu der entsprechenden Fuzzymenge (Az) sowie eine statistische Verteilung (G(Li)) der möglichen Werte des Parameters für den Fahrer,
- eine Messeinheit (20), die mindestens einen in dem Fahrzeug angeordneten Sensor (21) beinhaltet, wobei die Messeinheit (20) geeignet ist, zu dem gegebenen Zeitpunkt (t), den Wert (Li(t)) des in jede Prämisse eingehenden Parameters zu bestimmen,
- eine Recheneinheit (30), die geeignet ist, den vorbestimmten Fahrmodus (Mn), der aus jeder gespeicherten Fuzzylogik-Regel (Rx) resultiert, zu gewichten, indem, für jede Fuzzylogik-Regel (Rx), die folgenden Teilschritte implementiert werden:

b2) Anpassen der statistischen Verteilung, die jedem Parameter (Li) zugeordnet ist, der in jede Prämisse eingeht, indem der von der Messeinheit (20) zu dem gegebenen Zeitpunkt (t) gemessene Wert (Li(t)) des Parameters darin eingebunden wird,
b3) Bestimmen, zu dem gegebenen Zeitpunkt (t), für den Fahrer, der Ist-Zugehörigkeitsfunktion (F) jedes Parameters, der in jede Prämisse eingeht, zu der entsprechenden Fuzzymenge mithilfe der Referenz-Zugehörigkeitsfunktion (Fréf) und der um die Werte des Parameters angepassten statistischen Verteilung (G(Li)),
b4) anhand der Ist-Zugehörigkeitsfunktion (F) und des zu dem gegebenen Zeitpunkt (t) bestimmten Werts (Li(t)) des Parameters, Bestimmen eines Zugehörigkeitsgrads (P) des Parameters zu der entsprechenden Fuzzymenge (Az), b5) Gewichten des vorbestimmten Fahrmodus (Mn), der aus der Fuzzylogik-Regel (Rx) resultiert, anhand des Zugehörigkeitsgrads (P); und
c) eine Steuereinheit (40), die geeignet ist, den Fahrmodus (Mn(t)) des Fahrers des Fahrzeugs, zu dem gegebenen Zeitpunkt (t), anhand jedes gewichteten Fahrmodus (Mn(P)) zu erkennen, der aus jeder Fuzzylogik-Regel (Rx) resultiert.

**Claims**

1. Method for recognizing a driving mode (Mn(t)) of a driver of a vehicle at a given instant (t), said driving mode (Mn(t)) being recognized by a control unit from among a plurality of predetermined driving modes (Mn), comprising steps:

   a) of establishing at least one rule (Rx) of fuzzy logic associating, at the input, at least one premise about the membership of a driving parameter (Li) of the vehicle in a fuzzy set (Az) and, at the output, one of the predetermined driving modes (Mn);
   b) of a computing unit (30) weighting, for each established rule (Rx) of fuzzy logic, the predetermined driving mode (Mn) resulting from said rule (Rx) of fuzzy logic, by implementing the following substeps:

   b1) a measuring unit (20) determining, at the given instant (t), a value (Li(t)) of each parameter (Li) involved in each premise, each parameter being associated, on the one hand, with a reference function (Fréf) of the membership of said parameter (Li) in said corresponding fuzzy set (Az) and, on the other hand, with a statistical distribution (G(Li)) of the possible values of said parameter (Li) for the driver,
   b2) the computing unit (30) adjusting the statistical distribution (G(Li)) of the values which are associated with each parameter (Li) involved in each premise by incorporating therein the value (Li(t)) of said parameter (Li) determined at the given instant (t),
   b3) the computing unit (30) determining, for the driver, at the given instant (t), the actual function (F) of the membership of each parameter (Li) involved in each premise in said corresponding fuzzy set (Az), using the reference membership function (Fréf) and the adjusted statistical distribution (G(Li)) of the values of said parameter,
   b4) the computing unit (30) determining a degree (P) of membership of said parameter (Li) in said corresponding fuzzy set (Az), on the basis of said actual membership function (F) and of the value (Li(t)) of the parameter determined at said given instant (t),
   b5) the computing unit (30) weighting the predetermined driving mode (Mn) resulting from the rule (Rx) of fuzzy logic on the basis of said degree (P) of membership; and

   c) of the control unit recognizing the driving mode (Mn(t)) in which the vehicle is being driven, by the driver, at the given instant (t), on the basis of each weighted driving mode (Mn(P)) resulting from each rule (Rx) of fuzzy logic.

2. Method according to Claim 1, according to which, in substep b3), the computing unit (30) determines the actual function (F) of the membership of the parameter (Li) in the corresponding fuzzy set (Az) by shifting, along the x-axis, the reference function (Fréf) of the membership of this parameter (Li) in this fuzzy set (Az) by a value which is equal to the difference between the average (MOY) of the values of the parameter for the driver and the reference average (MOYr6f) of the values of the parameter for a reference driver.

3.  Method according to either of Claims 1 and 2, according to which, in substep b3), the computing unit (30) determines the actual function (F) of the membership of the parameter (Li) in the corresponding fuzzy set (Az) by modifying the slope of the reference function (Fréf) of the membership of the parameter in this fuzzy set in accordance with the position of the value (Li(t)) of the parameter (Li), at the given instant, in the statistical distribution of the values of this parameter (Li).

4.  Method according to one of Claims 1 to 3, according to which the statistical distribution of the possible values for the parameter (Li) is a Gaussian curve (G(Li)) providing the probability density associated with each value of said parameter (Li) for the driver.

5.  Method according to Claim 4, according to which the Gaussian curve (G(Li)) associated with each parameter (Li) is obtained by computing the arithmetic mean and the standard deviation of at least 1000 values of said parameter (Li) which are determined when the vehicle is being driven by the driver.

6.  Method according to Claim 5, according to which, in substep b2), the computing unit (30) adjusts the Gaussian curve (G(Li)) associated with each parameter (Li) as the vehicle is driven by the driver, by incorporating each value (Li(t)) of the parameter (Li) determined at each given instant (t) into the computation of the arithmetic mean and of the standard deviation of said parameter.

7.  Method according to one of Claims 1 to 6, according to which, in the recognition step c), the control unit (40) recognizes the driving mode of the driver of the vehicle, at the given instant (t), by computing the centre of gravity based on the weighted driving modes (Mn(P)) resulting from the rules (Rx) of fuzzy logic.

8.  Method according to one of Claims 1 to 7, according to which the driving parameters (Li) of the vehicle are the following: the accelerator pedal angle, the braking pressure, the clutch pedal angle, the steering wheel angle, the gearbox ratio, the transverse acceleration of the vehicle, the speed of the vehicle, the gradient of the accelerator pedal angle, the arithmetic mean of the accelerator pedal angle, the gradient of the steering wheel angle and the time to move between the brake and the accelerator pedal.

9.  Method according to one of Claims 1 to 8, according to which the measuring unit (20) determines the value (Li(t)) of the driving parameter (Li) of the vehicle directly using a sensor (21) arranged in the vehicle which measures said value, or on the basis of a computation involving another driving parameter, the value of which is measured using a sensor (21) arranged in the vehicle.

10. Method according to one of Claims 1 to 9, according to which the control unit (40) recognizes the driving mode from among the following predetermined driving modes (Mn): a sporty driving mode (M1), a flexible driving mode (M3) and at least one intermediate driving mode (M2) between said flexible driving mode (M3) and sporty driving mode (M1).

11. Device (1) for recognizing a driving mode (Mn(t)) of a driver of a vehicle at a given instant (t), comprising:

    - a memory unit (10) in which there are stored: a plurality of predetermined driving modes (Mn), at least one rule (Rx) of fuzzy logic associating, at the input, at least one premise about the membership of a driving parameter (Li) of the vehicle in a fuzzy set (Az) and, at the output, one of the predetermined driving modes (Mn); and, for each driving parameter (Li) involved in each premise, a reference function (Fréf) of the membership of said parameter (Li) in the corresponding fuzzy set (Az) as well as a statistical distribution (G(Li)) of the possible values of said parameter for the driver,
    - a measuring unit (20) comprising at least one sensor (21) arranged in the vehicle, said measuring unit (20) being adapted to determine, at the given instant (t), the value (Li(t)) of the parameter involved in each premise,
    - a computing unit (30) adapted to weight the predetermined driving mode (Mn) resulting from each stored rule (Rx) of fuzzy logic, by implementing, for each rule (Rx) of fuzzy logic, the following substeps:

        b2) adjusting the statistical distribution associated with each parameter (Li) involved in each premise by incorporating therein the value (Li(t)) of said parameter measured by the measuring unit (20) at the given instant (t),

b3) determining, at the given instant (t), for the driver, the actual function (F) of the membership of each parameter involved in each premise in the corresponding fuzzy set, using the reference membership function (Fréf) and the adjusted statistical distribution (G(Li)) of the values of said parameter,

b4) on the basis of said actual membership function (F) and of the value (Li(t)) of the parameter (Li) determined at said given instant (t), determining a degree (P) of membership of said parameter in the corresponding fuzzy set (Az),

b5) weighting the predetermined driving mode (Mn) resulting from the rule (Rx) of fuzzy logic on the basis of said degree (P) of membership; and

- a control unit (40) adapted to recognize the driving mode (Mn(t)) of the driver of the vehicle, at the given instant (t), on the basis of each weighted driving mode (Mn(P)) resulting from each rule (Rx) of fuzzy logic.

**Fig.1**

**Fig.2**

**Fig.3**

**Fig.4**

**Fig.5**

**Fig.6**

**Fig.7**

Fig.8

Fig.9

**RÉFÉRENCES CITÉES DANS LA DESCRIPTION**

**Documents brevets cités dans la description**

- FR 2757900
- FR 3074123
- FR 2800679